(19)

Europäisches
Patentamt

European
Patent Office

Office européen
des brevets

(11)  **EP 3 134 930 B1**

(12)  **EUROPEAN PATENT SPECIFICATION**

(45) Date of publication and mention
of the grant of the patent:
**22.05.2019  Bulletin 2019/21**

(21) Application number: **15722764.6**

(22) Date of filing: **21.04.2015**

(51) Int Cl.:
*H01M 2/02* *(2006.01)*      *H01M 2/36* *(2006.01)*
*H01M 10/0567* *(2010.01)*    *H01M 10/04* *(2006.01)*
*H01M 10/0587* *(2010.01)*    *H01M 10/42* *(2006.01)*

(86) International application number:
**PCT/IB2015/000526**

(87) International publication number:
**WO 2015/162481 (29.10.2015 Gazette 2015/43)**

(54)  **NONAQUEOUS ELECTROLYTE SECONDARY BATTERY AND METHOD OF MANUFACTURING THE SAME**

BATTERIE MIT NICHT-WÄSSRIGEN ELEKTROLYTEN UND VERFAHREN ZUR HERSTELLUNG DESSELBE

BATTERIE SECONDAIRE A ELECTROLYTE NON-AQUEUX, ET METHODE DE SA PREPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **24.04.2014  JP 2014090691**

(43) Date of publication of application:
**01.03.2017  Bulletin 2017/09**

(73) Proprietor: **TOYOTA JIDOSHA KABUSHIKI KAISHA**
**Toyota-shi, Aichi-ken 471-8571 (JP)**

(72) Inventor: **TAKAHATA, Koji**
**Toyota-shi**
**Aichi-ken 471-8571 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**WO-A1-2014/002647      JP-A- 2006 331 828**
**JP-A- 2010 287 456      US-A1- 2012 160 559**
**US-A1- 2014 045 016**

**Description**

BACKGROUND OF THE INVENTION

1. Field of the Invention

The present invention relates to a nonaqueous electrolyte secondary battery and a method of manufacturing the same.

2. Description of Related Art

The importance of nonaqueous electrolyte secondary batteries such as a lithium ion secondary battery has increased as a power supply, for example, a vehicle-mounted power supply or a power supply for a PC, a portable device, or the like. In particular, a lithium ion secondary battery is preferably used as a vehicle-mounted power supply with high output because it is light-weight and has high energy density. As a structure of such a battery, a battery structure is known including a wound electrode body in which a sheet-shaped positive electrode and a sheet-shaped negative electrode are laminated and wound together with a separator. In addition, a metal case is mainly used as a battery case from the viewpoint of obtaining high physical strength. When a metal case is used, typically, an electrode body is covered with an insulating film to insulate the battery case and the electrode body from each other. For example, Japanese Patent Application Publication No. 2010-287456 (JP 2010-287456 A) discloses a battery including an electrode body and a battery case, in which an insulating film is disposed between the electrode body and the battery case.

In a typical example of one of the nonaqueous electrolyte secondary batteries, the battery is charged and discharged by charge carriers (for example, lithium ions) moving between a positive electrode and a negative electrode of an electrode body, in which the electrode body is impregnated with a nonaqueous electrolytic solution, and the charge carriers are contained in the nonaqueous electrolytic solution. However, depending on charging-discharging conditions, the electrode body may generate heat. When the electrode body generates heat, the nonaqueous electrolytic solution is heated and expands and thus may flow out of the electrode body. Particularly in a nonaqueous electrolyte secondary battery used as a drive power supply for a vehicle, high-rate charging and discharging is performed. Therefore, the expanded nonaqueous electrolytic solution is likely to flow out of the electrode body. It is difficult to impregnate the nonaqueous electrolytic solution, which has been flown out of the electrode body, into the electrode body again even after the volume thereof returns to the original state due to a decrease in the temperature of the electrode body. Therefore, the amount of the nonaqueous electrolytic solution in the electrode body may decrease, or the concentration of the nonaqueous electrolytic solution may become uneven. Such a decrease in the amount of the nonaqueous electrolytic solution in the electrode body, unevenness in concentration, and the like may cause an increase in the internal resistance of a secondary battery including the electrode body and a decrease in the capacity retention thereof (that is, a decrease in the cycle characteristics).

In order to solve the above-described problems, Japanese Patent Application Publication No. 2013-235795 (JP 2013-235795 A) discloses a technique of increasing the swelling degrees of active material layers of a positive electrode and a negative electrode at opposite end portions of a wound electrode body in a winding axial direction, in which the opposite end portions may form an impregnation port and an outflow port for a nonaqueous electrolytic solution. According to the technique disclosed in JP 2013-235795 A, since the active material layers at the opposite end portions are swollen by being impregnated with the nonaqueous electrolytic solution, the nonaqueous electrolytic solution is prevented from flowing out of the wound electrode body. However, in the wound electrode body having such a configuration, the active material layers at the opposite end portions start to become swollen from the start of the impregnation of the nonaqueous electrolytic solution, which may block the impregnation of the nonaqueous electrolytic solution into the wound electrode body.

US 2014/045 016 A1 discloses a nonaqueous electrolyte secondary battery including: a flat electrode assembly including a positive electrode and a negative electrode; a bottomed prismatic hollow outer can storing the flat electrode assembly and a nonaqueous electrolyte and having an opening portion; and a sealing plate sealing the opening portion of the hollow outer can. The flat electrode assembly has a portion, other than the side facing the sealing plate, covered with an insulating sheet. The nonaqueous electrolyte contains lithium difluorophosphate ($LiPF_2O_2$) at the time of making the nonaqueous electrolyte secondary battery.

US 2012/160 559 A1 discloses an electric storage device in which an electrode assembly enclosed in an insulating cover can be smoothly inserted in a case and the electrode assembly is positioned in place inside the case when housed in the case. The electric storage device includes an electrode assembly, an insulating cover covering the electrode assembly, and a case including a case body having a rectangular box shape and having an opening, the case body being configured to house the electrode assembly and the insulating cover, wherein the insulating cover is formed into a rectangular box shape conforming to the case body, and a portion of each of edges at which adjacent side surfaces of the insulating cover meet each other is beveled into a beveled part, the portion being close to the bottom of the insulating cover.

WO 2014/002 647 A1 discloses a power storage device including an electrode assembly, a case that houses the electrode assembly, and an insulating sheet, which insulates the electrode assembly and the case from each other. The electrode assembly has a layered structure in which positive electrodes and negative electrodes are stacked. The electrode assembly has a first end face, which is orthogonal to the stacking direction, two primary faces, which are located on both sides in the stacking direction, and a tab, which extends on the first end face in the direction orthogonal to the stacking direction. The insulating sheet has a folded box shape, and further has two primary face covering portions, which respectively cover the primary faces of the electrode assembly, and non-primary-face covering portions, which cover the first end face of the electrode assembly and faces other than the primary faces thereof and are continuous with the primary face covering portions. The non-primary face covering portions overlap at least partially with each other.

SUMMARY OF THE INVENTION

The invention has been made to provide a nonaqueous electrolyte secondary battery and a method of manufacturing the same, in which a nonaqueous electrolytic solution is prevented from flowing out of an electrode body while being impregnated into the electrode body.

The above object is solved by the subject-matter of the independent claims. Advantageous embodiments are subject-matter of the dependent claims. According to a first aspect of the invention, there is provided a nonaqueous electrolyte secondary battery including: an electrode body; a nonaqueous electrolytic solution; a battery case; and a bag-shaped film. The electrode body has a laminate structure in which a positive electrode and a negative electrode are laminated. The battery case accommodates the electrode body and the nonaqueous electrolytic solution. The bag-shaped film covers the electrode body to insulate the electrode body and an inner wall of the battery case from each other. An inner pressure of the battery case is adjusted to be 0.14 MPa to 0.23 MPa.

According to the first aspect of the invention, the inner pressure of the battery case is appropriately adjusted. As a result, a decrease in the amount of the electrolytic solution in the electrode body after high-rate charging and discharging can be prevented. In addition, since the inside of the battery case is in the appropriate pressure state, the electrolytic solution discharged from the electrode body due to high-rate charging and discharging is promoted to be impregnated into the electrode body again. As a result, an increase in reaction resistance after high-rate charging and discharging can be suppressed, and high-rate cycle characteristics can be improved.

In the first aspect of the invention, an internal space of the battery case may contain carbon monoxide.

According to the above-described configuration, since gas is present in the internal space of the battery, the above-described pressure state can be suitably realized. Since the gas is carbon monoxide, the carbon monoxide is not likely to be dissolved in the nonaqueous electrolytic solution, and thus the above-described pressure state can be suitably maintained.

In the first aspect of the invention, the battery case has a flat square shape. The positive electrode and the negative electrode have an elongated shape. The positive electrode and the negative electrode are laminated with a separator interposed between the positive electrode and the negative electrode. The electrode body is a flat wound electrode body in which the positive electrode, the negative electrode, and the separator are wound in a flat shape. The battery case has a wide side surface and a narrow side surface. The electrode body is disposed such that a winding axial direction of the electrode body is a horizontal direction of the wide side surface. A ratio of a dimension of the electrode body in a vertical direction of the wide side surface to a dimension of the electrode body in the horizontal direction is in a range of 0.2 to 0.5.

According to the above-described configuration, the nonaqueous electrolytic solution is not likely to be discharged from the wound electrode body during high-rate charging and discharging and the like. As a result, an increase in the reaction resistance after high-rate charging and discharging can be further suppressed.

In the first aspect of the invention, the bag-shaped film has an opening that is positioned on an upper side of the battery case and may be formed of one sheet-shaped insulating film. The insulating film has at least a bag bottom portion, a first wide side surface portion, a second wide side surface portion, a first narrow side surface portion, a second narrow side surface portion, a third narrow side surface portion, a fourth narrow side surface portion, and a movement blocking mechanism, the first wide side surface portion and the second wide side surface portion are folded centering on the bag bottom portion. The first narrow side surface portion and the second narrow side surface portion extend from the first wide side surface portion to the second wide side surface portion. The third narrow side surface portion and the fourth narrow side surface portion extend from the second wide side surface portion to the first wide side surface portion. The first narrow side surface portion and the second narrow side surface portion are joined to the third narrow side surface portion and the fourth narrow side surface portion, respectively. The movement blocking mechanism is surrounded by the bag bottom portion, the first narrow side surface portion, and the third narrow side surface portion in a state where the insulating film is unfolded as a sheet. The movement blocking mechanism is configured to block at least a portion of a gap of the bag-shaped film through which an inside and an outside of the bag-shaped film are communicated with each other.

According to the above-described configuration, even when the nonaqueous electrolytic solution is discharged from the electrode body due to high-rate charging and discharging, the nonaqueous electrolytic solution is prevented from flowing out of the bag-shaped film and can be held in the bag-shaped film. As a result, the reimpregnation of the electrolytic solution discharged from the electrode body due to high-rate charging and discharging can be further promoted.

In the above-described configuration, the movement blocking mechanism includes an extending portion. The extending portion extends from the bag bottom portion and is folded to overlap lower ends of the first narrow side surface portion and the third narrow side surface portion.

According to the above-described configuration, the bag-shaped film can loosely block the gap, which is formed among the bag bottom portion, the first narrow side surface portion and the third narrow side surface portion, with the extending portion extending from the bag bottom portion. As a result, the electrolytic solution can be suitably prevented from flowing out of the bag-shaped film. Further, the reimpregnation of the electrolytic solution discharged from the electrode body due to high-rate charging and discharging can be suitably promoted.

In the above-described configuration, the extending portion may be joined to at least one of the first narrow side surface portion and the third narrow side surface portion.

According to the above-described configuration, the bag-shaped film can completely block the gap among the bag bottom portion, the first narrow side surface portion and the third narrow side surface portion. As a result, the electrolytic solution can be completely prevented from flowing out of the bag-shaped film. Further, the reimpregnation of the electrolytic solution discharged from the electrode body due to high-rate charging and discharging can be more reliably promoted.

In the first aspect of the invention, the nonaqueous electrolytic solution contains a carbon monoxide producing agent. The carbon monoxide producing agent is an oxalato complex compound containing at least one of phosphorus and boron as a constituent element.

The oxalato complex compound contains an oxalate ion ($C_2O_4{}^{2-}$) in the molecular structure thereof. When this oxalate ion is reduced and degraded, gas ($CO$ and $CO_2$) are produced. The oxalato complex can be degraded when the battery is charged and discharged. Accordingly, according to the above-described configuration, the inside of the battery case after being blocked can be easily made to be in the above-described pressure state.

The oxalato complex compound is reduced and degraded on the surface of the positive electrode, and a coating film containing at least one of phosphorus and boron is formed on the surface of the negative electrode. Accordingly, in the first aspect of the invention, it is preferable that the above-described coating film is formed on the surface of the negative electrode.

According to a second aspect of the invention, there is provided a method of manufacturing a nonaqueous electrolyte secondary battery. This method includes allowing an insulating bag-shaped film to accommodate an electrode body having a laminate structure where a positive electrode and a negative electrode are laminated; allowing a battery case to accommodate the electrode body, which electrode body is accommodated in the bag-shaped film, and a nonaqueous electrolytic solution; and adjusting an inner pressure of the battery case to be 0.14 MPa to 0.23 MPa.

According to the nonaqueous electrolyte secondary battery manufactured using the above-described method, a decrease in the amount of the electrolytic solution in the electrode body after high-rate charging and discharging is prevented, and an increase in the reaction resistance after high-rate charging and discharging is suppressed. In addition, since the inside of the battery case is in the appropriate pressure state, the electrolytic solution discharged from the electrode body due to high-rate charging and discharging is promoted to be impregnated into the electrode body again.

The method according to the second aspect of the invention further includes: forming the battery case in a flat square shape having a wide side surface and a narrow side surface; forming each of the positive electrode and the negative electrode into an elongated shape; laminating the elongated positive electrode and the elongated negative electrode with a separator interposed between the positive electrode and the negative electrode; winding the electrode body in a flat shape; forming the electrode body such that a ratio of a dimension of the electrode body in a vertical direction of the wide side surface to a dimension of the electrode body in a horizontal direction of the wide side surface is within a range of 0.2 to 0.5; and disposing the electrode body such that a winding axial direction of the electrode body is the horizontal direction.

According to the nonaqueous electrolyte secondary battery manufactured using the above-described method, the nonaqueous electrolytic solution is not likely to be discharged from the electrode body during high-rate charging and discharging and the like. That is, a nonaqueous electrolyte secondary battery can be manufactured in which an increase in the resistance due to outflow of the electrolytic solution is suppressed.

The method according to the second aspect of the invention further includes: disposing an opening of the bag-shaped film on an upper side of the battery case; and forming one sheet-shaped insulating film that has at least a bag bottom portion, a first wide side surface portion, a second wide side surface portion, a first narrow side surface portion, a second narrow side surface portion, a third narrow side surface portion, a fourth narrow side surface portion, and a movement blocking mechanism. In this step, the first narrow side surface portion and the second narrow side surface portion extend from the first wide side surface portion in a width direction of the first wide side surface portion. The third narrow side surface portion and the fourth narrow side surface portion extend from the second wide side surface portion in a width direction of the second wide side surface portion. The movement blocking mechanism is surrounded by the bag bottom portion, the first narrow side surface portion, and the third narrow side surface portion in a state where the insulating film is unfolded as a sheet. In addition to the above steps, the method further includes forming the bag-shaped film of the insulating film; folding the first wide side surface portion and the second wide side surface portion centering on the bag bottom portion; folding back the first narrow side surface portion and the second narrow side surface portion toward the first wide side surface portion; folding back the third narrow side surface portion and the fourth narrow side surface portion toward the second wide side surface portion; joining the first narrow side surface portion and the second narrow side surface portion to the third narrow side surface portion and the fourth narrow side surface portion, respectively; and disposing the movement blocking mechanism so as to block at least a portion of a gap of the bag-shaped film through which an inside and an outside of the bag-shaped film are communicated with each other.

According to the nonaqueous electrolyte secondary battery manufactured using the above-described method, even when the nonaqueous electrolytic solution is discharged from the electrode body due to high-rate charging and discharging, the nonaqueous electrolytic solution can be held in the bag-shaped film. Accordingly, the electrolytic solution can be prevented from flowing out of the bag-shaped film while maintaining the inner pressure of the battery to be appropriately high. As a result, the reimpregnation of the electrolytic solution discharged from the electrode body due to high-rate charging and discharging can be further promoted.

The method according to the second aspect of the invention may further include: introducing a carbon monoxide producing agent into the battery case, the carbon monoxide producing agent containing at least one of oxalato phosphate and oxalato borate. In addition, the inner pressure of the battery case may be adjusted by carbon monoxide which is produced by the carbon monoxide producing agent being degraded when the nonaqueous electrolyte secondary battery is charged.

According to the nonaqueous electrolyte secondary battery manufactured using the above-described method, the inside of the battery case after being blocked can be easily made to be in the above-described pressure state.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a cross-sectional view schematically showing a configuration of the nonaqueous electrolyte secondary battery according to an embodiment of the invention;
FIG. 2 is a diagram schematically showing an example of an unfolded shape of a bag-shaped film;
FIG. 3AA is a diagram showing an unfolded shape of a portion around a bag bottom portion and narrow side surface portions of the bag-shaped film shown in FIG. 1;
FIG. 3AB is a diagram showing an assembled shape of the portion of the bag-shaped film shown in FIG. 1;
FIG. 3BA is a diagram showing an unfolded shape of a portion around a bag bottom portion and narrow side surface portions of a bag-shaped film according to another embodiment;
FIG. 3BB is a diagram showing an assembled shape of the portion of the bag-shaped film according to the embodiment;
FIG. 3CA is a diagram showing an unfolded shape of a portion around a bag bottom portion and narrow side surface portions of a bag-shaped film according to still another embodiment;
FIG. 3CB is a diagram showing an assembled shape of the portion of the bag-shaped film according to the embodiment;
FIG. 3DA is a diagram showing an unfolded shape of a portion around a bag bottom portion and narrow side surface portions of a bag-shaped film according to still another embodiment;
FIGS. 3DB and 3DC are diagrams showing an assembled shape of the portion of the bag-shaped film according to the embodiment;
FIGS. 4A, 4B, 4C, and 4D are diagrams showing a state where a wound electrode body accommodates a bag-shaped film;
FIGS. 5A and 5B are diagrams showing a state where a battery case accommodates a wound electrode body covered with a bag-shaped film so as to construct a nonaqueous electrolyte secondary battery;
FIG. 6 is a graph showing an example of a relationship between the inner pressure, the initial resistance, and the resistance ratio in batteries of test examples;

FIG. 7 is a graph showing an example of a relationship between the aspect ratio and the resistance ratio in wound electrode bodies of the test examples; and

FIG. 8 is a graph showing an example of a relationship between the form of a bag-shaped film and the resistance ratio in the test examples.

DETAILED DESCRIPTION OF EMBODIMENTS

Hereinafter, embodiments of the invention will be described with reference to the drawings. Matters (for example, general configurations of a battery and a method of manufacturing the same which are not characteristics of the invention) necessary to practice this invention other than those specifically referred to in this description may be understood as design matters based on the related art in the pertinent field for a person of ordinary skills in the art. The invention can be practiced based on the contents disclosed in this description and common technical knowledge in the subject field. In addition, parts or portions having the same function are represented by the same reference numerals. In each drawing, a dimensional relationship (for example, length, width, or thickness) does not reflect the actual dimensional relationship.

"Secondary battery" described in this description refers to general storage devices which can be repeatedly charged and discharged and is a collective term for storage elements including so-called storage batteries such as a lithium ion secondary battery and electric double layer capacitors. In addition, "nonaqueous electrolyte secondary battery" refers to batteries including a nonaqueous electrolytic solution (typically, an electrolytic solution containing a supporting electrolyte in a nonaqueous solvent). In addition, "lithium ion secondary battery" refers to a secondary battery in which lithium ions are used as electrolyte ions, and charging and discharging are performed by electrons moving between positive and negative electrodes along with the lithium ions. In addition, an electrode active material refers to a material which can reversibly store and release chemical species (lithium ions in a lithium ion secondary battery) as charge carriers. Hereinafter, the invention will be described in detail using a flat square lithium ion secondary battery and a method of manufacturing the same as an example. The invention is not intended to be limited to the embodiments.

<Lithium Ion Secondary Battery>

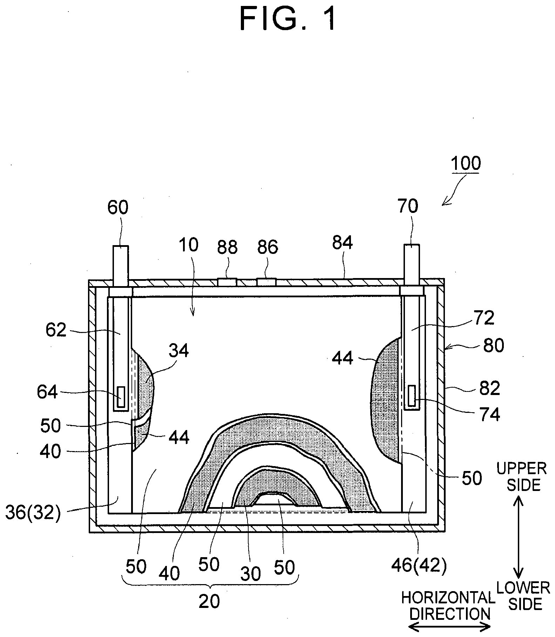

FIG. 1 is a cross-sectional view schematically showing an example of a configuration of a lithium ion secondary battery 100. The lithium ion secondary battery 100 includes an electrode body 20, a nonaqueous electrolytic solution (not shown), a battery case 80, and a bag-shaped film 10. In the example of the drawing, a so-called flat wound electrode body 20 is shown, in which an elongated positive electrode 30 and an elongated negative electrode 40 are laminated to form a laminate structure, and this laminate structure is wound around a winding axis to have a cross-section having a flat elongated circle-like shape.

Basically, this lithium ion secondary battery can be suitably manufactured using a method including the following steps (1) to (3):

(1) allowing the insulating bag-shaped film 10 to accommodate the electrode body 20 having the laminate structure where the positive electrode 30 and the negative electrode 40 are laminated;
(2) allowing the battery case 80 to accommodate the electrode body 20, which is accommodated in the bag-shaped film 10, and the nonaqueous electrolytic solution; and
(3) adjusting an inner pressure of the battery case 80 to be 0.14 MPa to 0.23 MPa.

1. Accommodation of Electrode Body in Bag-Shaped Film

[Electrode Body]

Typically, the electrode body 20 includes the positive electrode 30 and the negative electrode 40. The positive electrode 30 and the negative electrode 40 are insulated from each other by a separator 50 being interposed therebetween. The positive and negative electrodes 30, 40 include active material layers 34, 44 on respective surfaces (respective single surfaces or both surfaces) of current collectors 32, 42. In the positive and negative electrodes 30, 40, belt-shaped current collector portions 36,46 are set in at least one of the end portions of the current collectors 32, 42 along a longitudinal direction thereof. Each of the active material layers 34, 44 is disposed on a single surface or both surfaces of each of the current collectors 32, 42 excluding the current collector portions 36, 46 set in the current collectors 32, 42. Here, "current collector portions 36, 46" may be portions of the current collectors 32, 42 where the active material layers 34, 44 are not formed.

In general, the wound electrode body 20 is formed by laminating a first separator 50, the positive electrode 30, a second separator 50, and the negative electrode 40 in this order and winding this laminate around the winding axis WL. During the lamination, the negative electrode active material layer 44 is disposed so as to cover the positive electrode active material layer 34 in the width direction perpendicular to the longitudinal direction. In addition, the first and second separators 50 are arranged so as to cover the negative electrode active material layer 44 and the positive electrode active material layer 34 in the width direction. The current collector portion 36 of the positive electrode 30 and the current collector portion 46 of the negative electrode 40 are disposed so as to protrude to the opposite side of the separator 50 in the width direction. In this example, the current collector portions 36, 46 of the positive and negative electrodes protrude from opposite ends of the separator 50 in the winding axial direction in a spiral shape when seen from the winding axial direction. In addition, in this example, the current collector portions 36, 46 have a flat shape (elongated circle-like shape in cross-section) which is compressed in a direction perpendicular to the winding axis so as to correspond to the shape of the battery case 80. The shape of the wound electrode body 20 is not particularly limited as long as it corresponds to the shape of the battery case 80 to be used, and for example, may be a cylindrical shape.

The positive and negative electrode current collector portions 36, 46 protruding from the separator 50 are gathered in the above-described direction perpendicular to the winding axis and are connected by welding or the like to tip end portions 64, 74 of positive and negative electrode internal terminals 62, 72 which are provided on a sealing plate 84 to face the inside of the battery case 80. Through the internal terminals 62, 72, the positive and negative electrode current collector portions 36, 46 are electrically connected to a positive electrode external connection terminal 60 and a negative electrode external connection terminal 70, respectively, which are provided on the sealing plate 84. With such a configuration, the electrode body 20 is stably disposed such that the winding axial direction faces a horizontal direction of a wide side surface of the battery case 80.

According to the observation by the present inventors, even in the flat laminated electrode body, the same problems as in the wound electrode body such as insufficient impregnation of a nonaqueous electrolytic solution occur. Accordingly, the electrode body 20 may be a so-called flat laminated electrode body having a laminate structure in which plural plate-shaped positive electrodes 30 and plural plate-shaped negative electrodes 40 (typically, as well as the separator 50) are laminated. However, the insufficient impregnation of an electrolytic solution is more likely to occur in a wound electrode body including end portions only at opposite ends of a winding axis of an electrode body, rather than in a flat laminated electrode body including end portions (that is, impregnation ports of a nonaqueous electrolytic solution) at four corners of an electrode body. That is, the effects of the invention are more significant in the wound electrode body. Accordingly, the invention disclosed herein will be described using a nonaqueous electrolyte secondary battery including the wound electrode body 20 as an example.

[Positive Electrode]

The positive electrode (positive electrode sheet) 30 includes a positive electrode current collector 32 and a positive electrode active material layer 34. As the positive electrode current collector 32, for example, a metal foil suitable for the positive electrode 30 may be suitably used. As the positive electrode current collector 32, for example, a belt-shaped aluminum foil having a predetermined width and a thickness of about 15 $\mu$m may be used. In the positive electrode current collector 32, as described above, the positive electrode current collector portion 36 is set along one end portion in the width direction. The positive electrode active material layer 34 is disposed on a single surface or both surfaces of the positive electrode current collector 32 excluding the positive electrode current collector portion 36 set in the positive electrode current collector 32.

The positive electrode active material layer 34 is bonded onto the positive electrode current collector 32, in which particles of a positive electrode active material bind to each other through a binder. As the positive electrode active material, various materials which are used as a positive electrode active material of a lithium ion battery in the related art may be used without any particular limitation. The positive electrode active material layer 34 may further contain a conductive material. A ratio of the mass of the positive electrode active material to the total mass of the positive electrode active material layer 34 is suitably about 50 mass% or more (typically, 50 mass% to 95 mass%) and is usually preferably about 70 mass% to 95 mass%.

[Negative Electrode]

The negative electrode (negative electrode sheet) 40 includes a negative electrode current collector 42 and a negative electrode active material layer 44. As the negative electrode current collector 42, for example, a metal foil suitable for the negative electrode 40 may be suitably used. As the negative electrode current collector 42, for example, a belt-shaped copper foil having a predetermined width and a thickness of about 10 $\mu$m may be used. In the negative electrode current collector 42, as described above, the negative electrode current collector portion 46 is set along one end portion in the width direction. The negative electrode active material layer 44 is disposed on a single surface or both surfaces of the negative electrode current collectors 42 excluding the negative electrode current collector portion 46 set in the negative electrode current collectors 42.

The negative electrode active material layer 44 is bonded onto the negative electrode current collector 42, in which particles of a negative electrode active material bind to each other through a binder. As the negative electrode active material, various materials which are used as a negative electrode active material of a lithium ion battery in the related art may be used without any particular limitation. A ratio of the mass of the negative electrode active material to the total mass of the negative electrode active material layer 44 is not particularly limited, but is suitably about 50 mass% or more and is preferably about 90 mass% to 99 mass% (for example, 95 mass% to 99 mass%).

<Binder>

In addition, the binder allows particles of the electrode active materials and the conductive material contained in the active material layers 34, 44 to bind to each other, or allows these particles and the positive and negative electrode current collectors 32, 42 to bind to each other. This binder is not particularly limited as long as it can exhibit the above-described functions according to the method of manufacturing the positive electrode 30 or the negative electrode 40 and the use thereof. Representatively, various resin materials can be used. Preferable examples of the binder include polyvinylidene fluoride (PVdF), polytetrafluoroethylene (PTFE), a tetrafluoroethylene-hexafluoropropylene copolymer (FEP), polyvinyl alcohol (PVA), a vinyl acetate copolymer, styrene-butadiene rubber (SBR), polyethylene oxide (PEO), and an acrylic polymer.

[Separator]

As shown in FIG. 1, the separator 50 is the member which can allow charge carriers to move between the positive electrode 30 and the negative electrode 40 while securing the insulation between these electrodes. In this example, the separator 50 is configured of a band-shaped sheet material having a predetermined width which has plural fine holes. As the separator 50, a microporous resin film, for example, a microporous film formed of a polyolefin resin may be used. The separator 50 may have a single-layer structure or a laminate structure. In this example, the width of the negative electrode active material layer 44 is slightly wider than the width of the positive electrode active material layer 34. Further, the width of the separator 50 is slightly wider than the width of the negative electrode active material layer 44. Although not shown in the drawings, the separator 50 may include a heat resistance layer (HRL) on the surface thereof. The heat resistance layer includes heat-resistant particles formed of a heat-resistant material and a binder. The heat-resistant particles are not particularly limited, and particles of inorganic oxides such as alumina, silica, or mullite can be preferably used.

[Bag-Shaped Film]

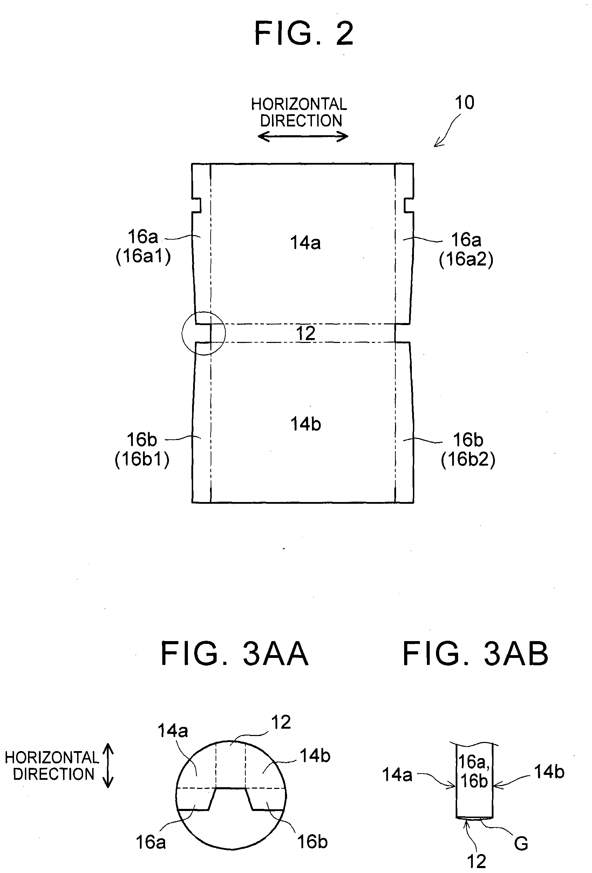

The wound electrode body 20, to which the positive and negative electrode current collector portions 36 and 46 are attached, including the internal terminals 62, 72 is covered with the bag-shaped film 10. Due to this bag-shaped film 10, direct contact between the wound electrode body 20 (and the internal terminals 62, 72), which is a power generating element, and the battery case 80 can be avoided, and insulation between the electrode body 20 and an inner wall of the battery case 80 can be secured. In this embodiment, the bag-shaped film 10 is formed in a bag shape having an opening on the upper side of the battery case and a closed bottom. Although described below in detail, the bag-shaped film 10 has a configuration shown in FIG. 2 in which one sheet-shaped insulating film 10 having an unfolded shape corresponding to the electrode body 20 is folded and joined. That is, the insulating film 10 is joined using a method including: folding a pair of wide side surface portions 14a, 14b centering on a bag bottom portion 12; and folding two pairs of narrow side surface portions 16a, 16b extending from the wide side surface portions 14a, 14b in the horizontal direction of the battery case (which is also the horizontal direction of the electrode body). When the bag-shaped film 10 accommodates the electrode body 20, the electrode body 20 is placed on the one sheet-shaped insulating film 10, and the insulating film 10 is folded. As a result, the bag-shaped film 10 can accommodate the electrode body 20.

Here, the material of the bag-shaped film 10 is not particularly limited as long as it has insulating properties, which are required for this type of battery, and can function as an insulating member. For example, a synthetic resin material which has high insulating properties and high heat resistance and is not likely to be corrugated is preferably used. Specifically, for example, a polyolefin resin material such as polyethylene (PE) or polypropylene (PP) can be suitably used. The thickness of the resin material is 1 mm or less (typically 10 $\mu$m to 1000 $\mu$m) and is preferably about 100 $\mu$m to 200 $\mu$m. The material, dimension, and the like of the bag-shaped film 10 can be appropriately changed depending on the configuration conditions of battery 100 and the like.

2. Accommodation of Electrode Body in Battery Case

Next, the battery case 80 accommodates the electrode body 20, which is accommodated in the bag-shaped film 10, and the nonaqueous electrolytic solution.

<Battery Case>

Typically, as shown in FIG. 1, the battery case 80 includes a case body 82 and a sealing plate 84. The case body 82 may have a hollow shape having an opening on one surface. The case body 82 of this example has a flat cuboid shape and has an opening on one surface corresponding to the upper side in a normal usage state of the lithium ion secondary battery 100. A rectangular opening is formed in the case body 82. The sealing plate 84 is a member for covering the opening of the case body 82. The sealing plate 84 may be a plate-shaped member having a shape substantially corresponding to the opening. The sealing plate 84 is joined to the periphery of the opening of the case body 82 by welding or the like. Therefore, the inside and outside of the battery case 80 are blocked (sealed).

In the example shown in FIG. 1, in a state where the sealing plate 84 is insulated, the positive electrode external connection terminal 60 and the negative electrode external connection terminal 70 are disposed on the sealing plate 84. A safety valve (not shown) 86 and a liquid injection port 88 are formed on the sealing plate 84. The safety valve 86 is configured to release an inner pressure of the battery case 80 when the inner pressure increases to be a predetermined level (for example, a set valve opening pressure of about 0.3 MPa to 1.0 MPa) or higher. In addition, the liquid injection port 88 is used to inject the nonaqueous electrolytic solution after the battery case 80 is sealed with the sealing plate 84. After the injection of the electrolytic solution, the liquid injection port 88 is sealed with a lid. It is more preferable that the lid is sealed using various welding methods. For example, laser welding using a YAG laser, a fiber laser, a carbon dioxide laser, a DOE laser, a LD laser, or the like may be adopted.

The material of the battery case 80 is not particularly limited, but for example, it is preferable that the battery case 80 contains a metal material as a major component because the metal material is light-weight and has high strength and superior thermal conductivity. Examples of the metal material include aluminum, iron, copper, and alloys thereof.

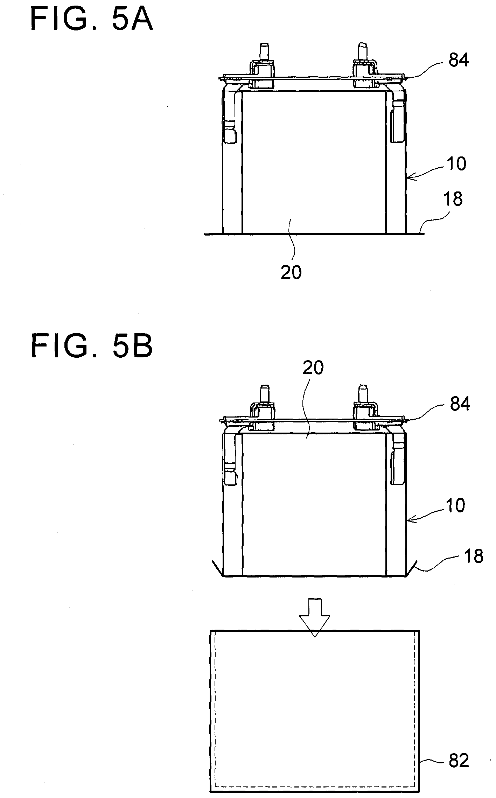

As shown in FIGS. 5A and 5B, the case body 82 accommodates the electrode body 20 which is accommodated in the bag-shaped film 10. By sealing the case body 82 and the sealing plate 84, the battery 100 is assembled. The nonaqueous electrolytic solution (not shown) is introduced into the assembled battery 100 through the liquid injection port 88 provided on the sealing plate 84. The nonaqueous electrolytic solution is supplied into the bag-shaped film 10 through the opening of the bag-shaped film 10 and is infiltrated into the electrode body 20 through opposite ends of the electrode body 20 in the winding axial direction.

[Nonaqueous Electrolytic Solution]

As the nonaqueous electrolytic solution, a solution containing an electrolyte in an appropriate nonaqueous solvent may be used. As the electrolyte, various electrolytes or equivalents thereof which are used in a lithium ion battery in the related art may be used without any particular limitation. As the nonaqueous solvent, organic solvents such as ethylene carbonate, propylene carbonate, dimethyl carbonate, diethyl carbonate, ethyl methyl carbonate, 1,2-dimethoxyethane, 1,2-diethoxyethane, tetrahydrofuran, and 1,3-dioxolane may be used. Among these organic solvents, one kind may be used alone, or two or more kinds may be used in combination as the nonaqueous solvent. In addition, as the electrolyte (also referred to as "supporting electrolyte"), for example, a lithium salt such as $LiPF_6$, $LiBF_4$, $LiAsF_6$, $LiCF_3SO_3$, $LiC_4F_9SO_3$, $LiN(CF_3SO_2)_2$, or $LiC(CF_3SO_2)_3$ may be used. For example, a nonaqueous electrolytic solution in which a mixed solvent of ethylene carbonate and diethyl carbonate (for example, mass ratio=1:1) contains $LiPF_6$ in a concentration of about 1 mol/L may be used. As the electrolyte, a gel or solid electrolyte having high ion conductivity may be used instead of the nonaqueous electrolyte. Various additives may be appropriately added to the nonaqueous electrolytic solution according to the purpose, and examples of the additives include a film forming agent such as vinylene carbonate (VC) or fluoroethylene carbonate (FEC); and an overcharge additive such as biphenyl (BP) or cyclohexylbenzene (CHB).

3. Adjustment of Inner Pressure of Battery Case

In the nonaqueous electrolyte secondary battery 100 disclosed herein, the inner pressure of the battery case is adjusted to be an appropriate pressure. As long as being performed after the injection of the nonaqueous electrolytic solution, the adjustment of the inner pressure of the battery case may be performed during the sealing of the battery case 80 or may be performed using initial charging after the sealing of the battery case 80. For example, typically, the adjustment of the inner pressure may be realized using at least one of the following methods (1) and (2). Alternatively, methods other than (1) and (2) may be used.

(1) Injecting appropriate gas into the battery case 80 for pressurization
(2) Producing appropriate gas in the case after the sealing of the battery case 80

It is preferable that the gas realizing the above pressure state has low solubility in the nonaqueous electrolytic solution. For example, in a commonly-used nonaqueous electrolytic solution, carbon monoxide (CO) may be preferably used as a gas having low solubility.

When the adjustment of the inner pressure is performed by the injection of the gas for pressurization, the following procedure may be adopted including: introducing the nonaqueous electrolytic solution into the battery case 80 through the injection port 88 in "2. Accommodation of Electrode Body in Battery Case"; injecting the gas into the battery case 80 through the injection port 88 for pressurization; and then sealing the injection port 88 with a lid.

When the appropriate gas is produced in the case after the sealing of the battery case 80, the following procedure may be preferably adopted. That is, a gas producing agent is introduced into the battery case 80 in advance. The gas producing agent is reduced and degraded due to the initial charging (which may be conditioning) of the battery 100 after the sealing of the battery case 80. As a result, desired gas can be produced in the case. The gas producing agent may be introduced into the battery case 80 as it is, or may be introduced thereinto after being contained in the nonaqueous electrolytic solution or as a part of another component such as the positive electrode 30, the negative electrode 40, or the separator 50. In order to degrade the gas producing agent in an appropriate amount, it is preferable that the gas producing agent is introduced into the battery case 80 after being contained in the nonaqueous electrolytic solution or the positive electrode 30.

It is preferable that the gas producing agent is a CO producing agent that produces CO having low solubility in the nonaqueous electrolytic solution as described above. Preferable examples of the CO producing agent include an oxalato complex compound having an oxalate ion ($C_2O_4{}^{2-}$) in the molecular structure thereof. The oxalato complex compound suitably produces gas (CO and $CO_2$) in the battery case 80 after sealing by the oxalate ion being reduced and degraded due to initial charging. The oxalato complex compound may be used without any particular limitation, but an oxalato complex compound containing at least one of phosphorus (P) and boron (B) as a constituent element is more preferably used. Typical examples of an oxalato complex compound containing P include lithium difluorobis(oxalato)phosphate (LPFO) and lithium tris(oxalato)phosphate. Typical examples of an oxalato complex compound containing B include lithium bis(oxalato)borate and lithium difluoro(oxalato)borate.

When the gas producing agent is added (used) to the nonaqueous electrolyte secondary battery, the gas producing agent remains as it is without being degraded or is degraded into a degradation product in the battery case. Accordingly, the addition of the gas producing agent can be verified by detecting the gas producing agent and/or the degradation product. The degradation product may be coating film formed on a surface of an electrode (typically, the negative electrode). Specifically, when the oxalato complex compound containing at least one of phosphorus and boron as a constituent element is used as the gas producing agent, a coating film containing at least one of phosphorus and boron may be formed on the surface of the negative electrode. The coating film can be verified by detecting phosphorus and/or boron derived from the oxalato complex compound. For example, these characteristic elements can be detected and the contents thereof can be measured based on a well-known appropriate detection method such as inductively coupled plasma atomic emission spectroscopy or X-ray absorption fine structure spectroscopy.

By adjusting the inner pressure of the battery case to be in the appropriate pressure state as described above, the impregnation force is improved during the impregnation of the nonaqueous electrolytic solution into the electrode body 20, and thus the impregnation of the nonaqueous electrolytic solution into the electrode body 20 is promoted. Accordingly, the number of manufacturing steps can be reduced, the ability of the electrode body 20 to hold the nonaqueous electrolytic solution is improved, the battery can be charged and discharged due to a sufficient amount of electrolyte, and further a battery reaction can be realized with low resistance. In addition, when the battery 100 constructed as described above is charged and discharged at a high rate, the wound electrode body 20 may generate heat. When the electrode body 20 generates heat, the nonaqueous electrolytic solution impregnated into the electrode body is heated and expands and thus may flow out of the electrode body. In the battery 100 disclosed herein, the inner pressure of the battery case is adjusted to be the appropriate pressure. Therefore, during the heat generation of the electrode body 20, the nonaqueous electrolytic solution can be prevented from flowing out of the electrode body. Further, when the temperature of the electrode body 20 decreases after the high-rate charging and discharging, the volume of the nonaqueous electrolytic solution returns to the original state. In the battery 100 disclosed herein, the inner pressure of the battery case is adjusted to be the appropriate pressure. Therefore, the electrolytic solution flowing out of the electrode body 20 after high-rate charging and discharging can be promoted to be impregnated into the electrode body 20 again. As a result, a resistance increase during and after high-rate charging and discharging can be suppressed to be low, and battery performance can be maintained to be high for a long period of time.

The impregnation of the nonaqueous electrolytic solution can be promoted as long as the inner pressure of the battery case is a little higher than the pressure of an atmosphere (typically, the atmospheric pressure; about 0.1 MPa) during the impregnation. When the pressure of the atmosphere is as described above, the inner pressure is preferably about 0.12 MPa or higher and more preferably 0.13 MPa or higher (for example, 0.14 MPa or higher). The upper limit of the inner pressure is not particularly limited, but for example, when the inner pressure is excessively high, the battery resistance may increase. In addition, it is necessary to consider battery designs such as the strength and safety of the battery case and the opening pressure of the safety valve. Accordingly, the upper limit of the inner pressure is 0.25 MPa or lower and is, for example, preferably 0.23 MPa or lower.

[Form of Bag-Shaped Film]

The form (structure) of the bag-shaped film 10 may greatly affect the effect of promoting the impregnation of the nonaqueous electrolytic solution and the effect of suppressing the resistance increase due to high-rate charging and discharging. Hereinafter, these effects and the form of the bag-shaped film 10 will be described. FIG. 2 shows a state where the bag-shaped film 10 according to an embodiment is unfolded into one sheet shape (insulating film 10) before being folded into a bag shape. Roughly, in the unfolded state, the bag-shaped film 10 includes the following portions. That is, the bag-shaped film 10 includes: a pair of wide side surface portions 14a, 14b that corresponds to a pair of wide side surfaces of the flat wound electrode body 20 to be accommodated; a bag bottom portion 12 that is present between the pair of the wide side surface portions 14a, 14b; and two pairs of narrow side surface portions 16a (16a1, 16a2), 16b (16b1, 16b2) which extend from the pair of wide side surface portions 14a, 14b in the respective horizontal directions. When being folded, the bag bottom portion 12 corresponds to the bottom of the bag-shaped film 10 and contacts a wound curved portion that is positioned below the battery case of the wound electrode body 20. The narrow side surface portion 16a1, 16a2 extend from opposite sides (horizontal direction) of the wide side surface portion 14a, and the narrow side surface portion 16b1, 16b2 extend from opposite sides (horizontal direction) of the wide side surface portion 14b. When being folded, the narrow side surface portions 16al to 16b2 form the narrow side surface of the bag-shaped film 10 and correspond to a portion that covers a wound cross-section of the wound electrode body 20.

In regard to the insulating film 10 in the unfolded state shown in FIG. 2, FIG. 3AA is a plan view showing the shape of a portion of the insulating film 10 around the bag bottom portion 12 and the narrow side surface portions 16, and FIG. 3AB is a side view showing a folded shape the insulating film 10. As shown in FIG. 3AA, side end portions of the wide side surface portions 14a, 14b and the bag bottom portion 12 are on a series of straight lines. Each of these lines corresponds to one end portion of the wound electrode body 20 in the winding axial direction. The narrow side surface portions 16a, 16b extend from the wide side surface portions 14a, 14b that is positioned on the opposite sides of the bag bottom portion 12. By the pair of narrow side surface portions 16a, 16b being folded, the wound cross-section of the wound electrode body 20 is covered with the insulating film 10. The narrow side surface portions 16a, 16b are joined by being bonded to each other. Typically, the joining is performed by welding. The dimension of the narrow side surface portions 16a, 16b in a protruding direction is not particularly limited as long as the narrow side surface portions 16a, 16b can be welded. For example, when the dimension of the wound electrode body 20 in a flat thickness direction of the battery case 80 is represented by "thickness h", the dimension of the narrow side surface portions 16a, 16b in the protruding direction is more than 0.5 h to 1 h and preferably 0.7 h to 1 h with respect to the wound electrode body 20.

In the bag-shaped film 10 shown in FIG. 3AB, lower end portions of the narrow side surface portions 16a, 16b and the bag bottom portion 12 are not welded to each other, and thus a gap G is formed. The inside and outside of the bag-shaped film 10 are directly communicated (linearly communicated) with each other through the gap G. In addition, the size of the gap G may be relatively large depending on the shape of the wound electrode body 20 (for example, shape of a cross-section of the wound curved portion). The bag-shaped film 10 may have this form. However, according to the bag-shaped film 10 having this form, the nonaqueous electrolytic solution discharged from the wound electrode body 20 after high-rate charging and discharging may relatively easily flow out of the bag-shaped film 10. The flown nonaqueous electrolytic solution may be infiltrated into a gap between the bag-shaped film 10 and the battery case 80. The cooled nonaqueous electrolytic solution is not likely to return to the inside of the bag-shaped film 10 through the gap G. It is preferable that the bag-shaped film 10 includes a movement blocking mechanism (movement blocking member) that is provided among the bag bottom portion 12 and the joined narrow side surface portions 16a, 16b so as to prevent the movement of the electrolytic solution between the inside and outside of the bag-shaped film 10. As a result, the electrolytic solution which is supplied into the bag-shaped film 10 through the upper opening of the bag-shaped film 10 can be prevented from flowing out of the bag-shaped film.

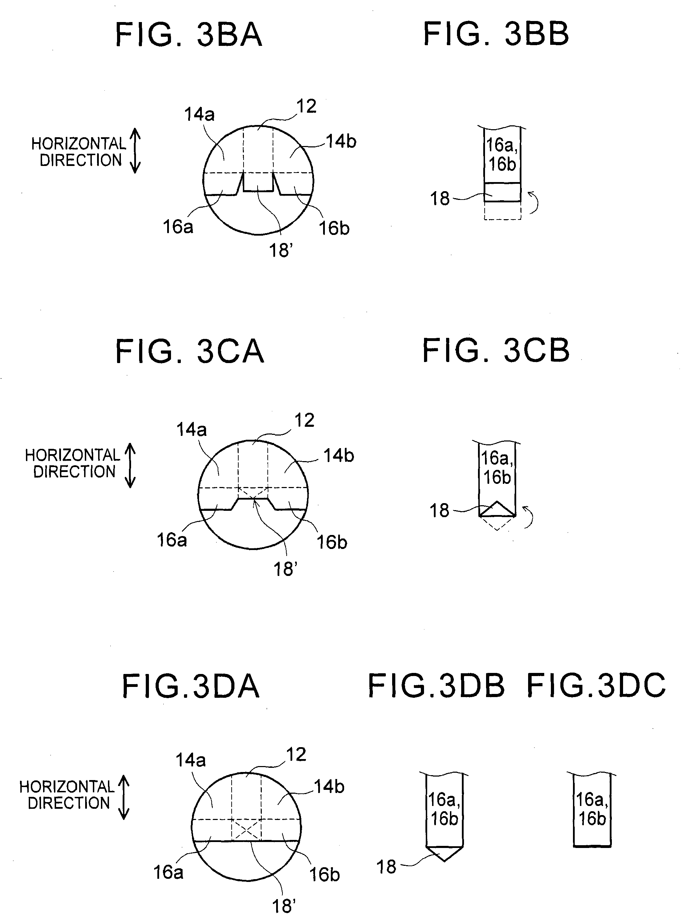

FIGS. 3BA to 3DC are diagrams showing an unfolded shape of a portion of the bag-shaped film 10 (insulating film 10) including the movement blocking mechanism and are side views showing the assembled bag-shaped film 10. The movement blocking mechanism is not particularly limited as long as it can prevent the movement of the electrolytic solution between the inside and outside of the bag-shaped film 10. For example, as shown in FIGS. 3BA and 3BB, the movement blocking mechanism may be configured of an extending portion 18 that extends from the bag bottom portion 12 in the horizontal direction (that is, the winding axial direction). The extending portion 18 is folded to overlap the pair of joined narrow side surface portions 16a, 16b so as to loosely block the gap G from the outside and to prevent the movement of the electrolytic solution between the inside and outside of the bag-shaped film 10. The extending portion 18 may extend to the lower end side of the narrow side surface portions 16a, 16b, but it is more preferable that the extending portion 18 extends from the bag bottom portion 12. With such a configuration, as shown in FIGS. 5A and 5B, the extending portion 18, which protrudes from the wound electrode body 20 in the horizontal direction before being folded, can be easily folded when being accommodated in the case body 82. As a result, the bag-shaped film 10 including the extending portion 18 is prevented from being corrugated or twisted, and the wound electrode body 20 can be accommodated in the case body 82. The extending portion 18 may include, for example, a slit (not shown) in the extending direction (horizontal direction). Due to the slit, when the bag bottom portion 12 is curved, the extending portion 18 is prevented from being corrugated and can be folded together with the bag bottom portion 12. For example, the shape of the bag bottom portion 12 of the bag-shaped film 10 can come into close contact with the wound curved portion of the wound electrode body 20 on the bottom side.

In addition, the movement blocking mechanism may be configured of the extending portion 18 shown in FIG. 3CB. This extending portion 18 can be formed by folding an extending portion-forming portion 18' as shown in FIG. 3CA. This extending portion-forming portion 18' extends from the bag bottom portion 12 in the horizontal direction (that is, the winding axial direction) and also extends from the narrow side surface portions 16a, 16b. That is, the extending portion-forming portion 18', the bag bottom portion 12, and the narrow side surface portions 16a, 16b are connected to each other without passing through a slit or the like, thereby forming one plane. When the narrow side surface portions 16a, 16b are folded and joined, the extending portion-forming portion 18' is folded, for example, in a valley shape along a dotted line of FIG. 3CA. As a result, the triangular extending portion 18 can obtain a form of protruding from the rectangular bag-shaped film. In the example shown in FIG. 3CA, the extending dimension of the extending portion-forming portion 18' is adjusted to be half (h/2) of the thickness h of the wound electrode body 20 such that the extending portion 18, which protrudes from the bag bottom portion after being folded, is formed by causing two insulating films to overlap each other. In addition, corner portions of the narrow side surface portions 16a, 16b, which protrude from the extending portion-forming portion 18', are tapered such that the folded narrow side surface portions 16a, 16b are well-fitted. The extending portion 18 having this form may be formed, for example, by causing two insulating films to overlap each other. According to the extending portion 18 having this configuration, as compared to the example shown in FIG. 3B, the extending portion 18 and the narrow side surface portions 16a, 16b are connected in series, and thus the gap G is blocked with the extending portion 18. As a result, the movement of the electrolytic solution between the inside and outside of the bag-shaped film 10 can be further prevented. The tapered shape may be linear (C-tapered) or curved (R-tapered).

The extending dimension of the extending portion 18 is not limited to be h/2 as described above and can be appropriate adjusted, for example, in a range from more than 0 to h. As the extending dimension decreases from h/2, the dimension of a portion where the extending portion 18 and the narrow side surface portions 16a, 16b are continuously connected decreases. In addition, since the dimension of the folded extending portion 18 is decreased, the effect of preventing the movement of the electrolytic solution may be decreased. In addition, as the extending dimension increases from h/2, the dimension of a portion where the extending portion 18 and four insulating films overlap each other increases. Therefore, it is difficult to fold the extending portion 18, and the folded extending portion 18 may be poorly-fitted. It is preferable that the extending dimension of the extending portion 18 is adjusted in a range of about h/4 to h/2.

On the other hand, the movement blocking mechanism may be formed, for example, by joining the bag bottom portion 12 and the narrow side surface portions 16a, 16b to each other as shown in FIGS. 3DA to 3DC. Typically, the joining is performed by welding or fusing. That is, for example, a configuration may be adopted, in which the extending portion 18 shown in FIG. 3BA is folded upward and is further folded to overlap an overlapping portion of the narrow side surface portions 16a, 16b, and then these portions are welded. Alternatively, a configuration may be adopted, in which the extending portion 18 is formed as shown in FIGS. 3CA to 3DB and is joined to a portion around a boundary of the bag bottom portion 12 and the narrow side surface portions 16a, 16b such that the bag bottom portion 12 and the narrow side surface portions 16a, 16b are continuously joined to each other. The joining may be performed by welding such that the extending portion 18 remains, or may be performed by fusing such that the extending portion 18 is cut and removed as shown in FIG. 3DC. According to this fusing, the extending portion 18 as a member is not formed in the bag-shaped film 10. That is, the movement blocking mechanism is not necessarily formed as an individual member.

As described above, the movement blocking mechanism is provided between the bag bottom portion 12 and the narrow side surface portions 16a, 16b of the bag-shaped film 10 so as to prevent the movement of the electrolytic solution between the inside and outside of the bag-shaped film 10. As a result, the nonaqueous electrolytic solution can be prevented from flowing out of the bag-shaped film 10. For example, even after the nonaqueous electrolytic solution is discharged from the wound electrode body 20 due to high-rate charging and discharging or the like, the nonaqueous electrolytic solution remaining in the bag-shaped film 10 is easily impregnated into the wound electrode body 20 again.

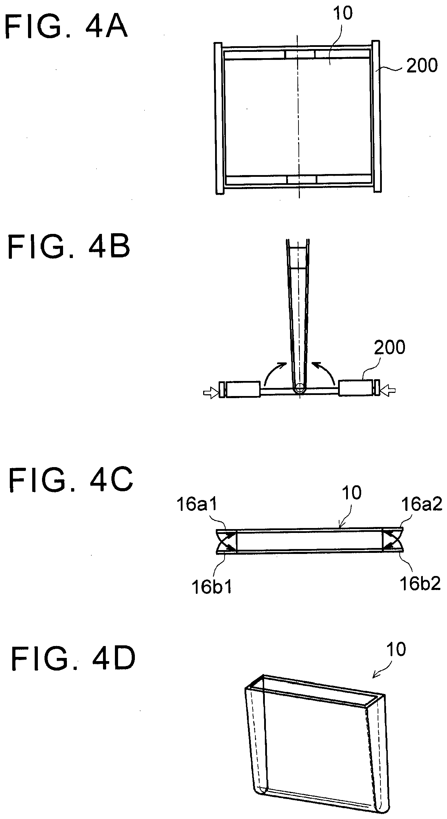

The insulating film 10 in the unfolded state can be easily folded (assembled) into the bag-shaped film 10, for example, using a film folding tool 200. Specifically, for example, as shown in FIG. 4A, the insulating film 10 in the unfolded state is placed on the film folding tool 200. The wide side surface of the flat wound electrode body 20 is positioned and placed on the wide side surface portion 14a of the insulating film 10. At this time, the insulating film 10 may include a notch for positioning as shown in FIG. 2. Next, by bending the tool 200 as shown in FIG. 4B, the wide side surface portion 14b of the insulating film 10 is folded along the flat wound electrode body 20. Next, as shown in FIG. 4C, the four narrow side surface portions 16a1, 16a2, 16b1, 16b2, which protrude from opposite ends of the wound electrode body in the winding axial direction, are folded along the wound cross-section of the flat wound electrode body 20, and the two narrow side surface portions 16a, 16b are fused at an overlapping portion thereof. As a result, as shown in FIG. 4D, the insulating film 10 can be formed into a bag shape, and the bag-shaped film 10 can accommodate the flat wound electrode body 20. In the configuration where the protruding portion 18 is formed by folding the extending portion-forming portion 18', the extending portion-forming portion 18' may be folded when the narrow side surface portions 16a, 16b are folded as shown in FIG. 4C.

[Aspect Ratio of Electrode Body]

The impregnating ability of the nonaqueous electrolytic solution into the flat wound electrode body 20 can be improved by appropriately adjusting the inner pressure of the battery case 80 as described above, but can be further improved by controlling the form of the flat wound electrode body 20. That is, in the wound electrode body, the impregnation of the nonaqueous electrolytic solution progresses along the winding axial direction. Accordingly, when the dimension of the wound electrode body in the vertical direction perpendicular to the winding axial direction, which also functions as the impregnation port of the nonaqueous electrolytic solution, is greater than the dimension of the wound electrode body in the horizontal direction (winding axial direction), the impregnation of the nonaqueous electrolytic solution is likely to be promoted. However, the impregnation port may function as a discharge port during the swelling of the nonaqueous electrolytic solution. Accordingly, in order to prevent the nonaqueous electrolytic solution from being discharged during the swelling of the nonaqueous electrolytic solution, a ratio of the dimension of the wound electrode body 20 in the vertical direction to the dimension of the wound electrode body 20 in the horizontal direction, that is, an aspect ratio (vertical/horizontal) is 0.5 or less. The aspect ratio is preferably 0.48 or less (for example, 0.45 or less). However, as the aspect ratio decreases, the time required for the impregnation of the nonaqueous electrolytic solution during the construction of the battery increases, which decreases the manufacturing efficiency. In addition, when nonaqueous electrolytic solution is discharged from the wound electrode body 20 during the construction of the battery, it is difficult to impregnate the nonaqueous electrolytic solution into the wound electrode body 20 again. Therefore, the lower limit of the aspect ratio is 0.2 or more and more preferably 0.23 or more (for example, 0.25 or more).

Hereinafter, several examples relating to the invention will be described, but the examples are not intended to limit the invention.

[Test Example 1: Inner Pressure of Battery]

$LiNi_{1/3}Co_{1/3}Mn_{1/3}O_2$ (average particle size: 10 $\mu$m) as a positive electrode active material; acetylene black (AB) as a conductive material; polyvinylidene fluoride (PVdF) as a binder were weighed at a weight ratio of 90:8:2. These materials were dispersed in NMP to prepare a positive electrode paste. This paste was supplied onto both surfaces of an elongated sheet-shaped positive electrode current collector (aluminum foil) having a thickness of 15 $\mu$m such that the coating weight was 20 mg/cm$^2$ (in terms of solid content), followed by drying. As a result, a positive electrode sheet was prepared. By rolling this positive electrode sheet, the thickness thereof was adjusted to 130 $\mu$m, and the active material layer density was adjusted to 2.8 g/cm$^3$.

A negative electrode active material (natural graphite: C, average particle size: 5 $\mu$m); styrene-butadiene rubber (SBR) as a binder; and carboxymethyl cellulose (CMC) as a thickener were weighed at a weight ratio of 98:1:1, and were dispersed in ion exchange water. As a result, a negative electrode paste was prepared. This paste was supplied onto both surfaces of an elongated sheet-shaped negative electrode current collector (copper foil) having a thickness of 10 $\mu$m such that the coating weight was 14 mg/cm$^2$ (in terms of solid content), followed by drying. As a result, a negative electrode sheet was prepared. By rolling this negative electrode sheet, the thickness thereof was adjusted to 100 $\mu$m, and the active material layer density was adjusted to 1.4 g/cm$^3$.

A separator was interposed between the positive electrode and the negative electrode prepared as described above, and this laminate was wound to have a cross-section having an elongated circle-like shape. As a result, a flat wound electrode body was prepared. The separator had a three-layer structure in which a porous polypropylene layer having a thickness of 20 $\mu$m was laminated on both surfaces of a porous polyethylene layer. Positive and negative current collector portions integrated into a lid of a battery case were welded to the positive electrode current collector and the negative electrode current collector of the flat wound electrode body, respectively.

Next, the flat wound electrode body was accommodated in an insulating bag-shaped film. The bag-shaped film was constructed by folding an insulating film having an unfolded shape of FIG. 2 (and FIGS. 3AA and 3AB). Specifically, for example, as shown in FIG. 4A, the insulating film in the unfolded state was placed on a film folding tool. The wound curved portion of the flat wound electrode body was positioned and placed on a bottom surface portion at the center of the insulating film. Next, by bending the tool as shown in FIG. 4B, wide side surface portions of the insulating film were folded along the wide side surface portion of the flat wound electrode body. Next, as shown in FIG. 4C, four narrow side surface portions in total of, which protruded from opposite sides of each of the wide side surface portions, were folded along the wound cross-section of the flat wound electrode body, and two narrow side surface portions were fused at an overlapping portion thereof. As a result, as shown in FIG. 4D, the insulating film was formed into a bag shape, and the bag-shaped film accommodated the flat wound electrode body. The bottom surface portion of the bag-shaped film according to this embodiment was formed to be curved along the wound curved portion of the flat wound electrode body, and a gap was formed between the narrow side surface portions and the wide side surface portions which were positioned at a lower end of the wound cross-section.

A case body of the battery case accommodated the flat wound electrode body which was accommodated in the bag-shaped film, and the lid and the case body were welded to seal the case. As the battery case, a flat square battery case formed of an aluminum alloy having a length of 75 mm, a width of 120 mm, a thickness of 15 mm, and a case thickness of 1 mm was used. A nonaqueous electrolytic solution was injected through an electrolytic solution injection port provided on the lid. Here, in the nonaqueous electrolytic solution, 1 mol/L of $LiPF_6$ as a supporting electrolyte was dissolved in a mixed solvent containing EC, DMC, and EMC at a volume ratio of 3:4:3. After the injection of the nonaqueous electrolytic solution, CO gas was blown into the battery case to change the inner pressure of the battery to 12 values in a range of 0.12 MPa to 0.375 MPa. Then, the liquid injection port was sealed. As a result, batteries (nonaqueous electrolyte secondary batteries for evaluation) having 12 different values of the inner pressure of the case were prepared. The theoretical capacity of the battery was 4 Ah.

After performing conditioning on the batteries under the following conditions, the initial resistance and the resistance ratio after a high-rate cycle test were measured.

(Conditioning)

The following charging-discharging operations (1) and (2) were repeatedly performed on the batteries in 3 cycles at a temperature of 25°C to perform a conditioning treatment.

> (1) The batteries were charged to 4.2 V at a constant current (CC) at a rate of 1/3 C, and then the operation was stopped for 10 minutes.
> (2) The batteries were discharged to 3.0 V at a constant current (CC) at a rate of 1/3 C, and then the operation was stopped for 10 minutes.

(Measurement of Initial Resistance)

The batteries were charged to SOC 20% at a constant current (CC) at a temperature of 25°C. The batteries whose SOC was adjusted to 20% were discharged to 3 V at a constant current (CC) at a discharge rate of 10 C, and the voltage drop amount after 10 seconds from discharging was measured. The IV resistance was calculated by dividing the measured voltage drop amount by the corresponding the current value and was set as the initial resistance.

(High-Rate Cycle Test)

The SOC of the batteries after the initial resistance measurement was adjusted to 100% at a temperature of 25°C, and then the following charging-discharging operations (1) and (2) were repeatedly performed thereon in 1200 cycles to perform the high-rate cycle test. The electrolytic solution was promoted to be discharged from the electrode body by swelling the electrolytic solution.

> (1) The batteries were charged at a constant current (CC) of 75 A for 40 seconds, and the operation was stopped for 5 seconds.
> (2) The batteries were charged to SOC 100% at a constant current (CC) of 10 A, and the operation was stopped for 5 seconds.

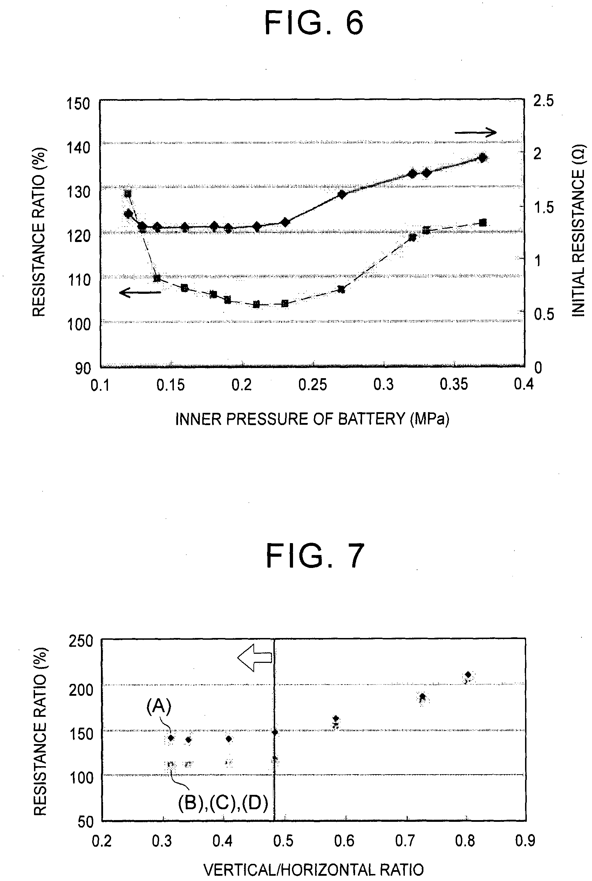

After the high-rate cycle test, the IV resistance was measured using the same method as in the measurement of the initial resistance. The reaction resistance ratio was calculated based on the following equation. FIG. 6 shows a relationship between the reaction resistance ratio obtained from the equation and the inner pressure of the battery at the initial resistance.

$$\text{Reaction Resistance ratio (\%)} = (\text{Resistance after High-Rate Cycle Test}) \div (\text{Initial Resistance}) \times 100$$

As shown in FIG. 6, the following results were found: as the inner pressure of the battery increased to be higher than the atmospheric pressure (about 0.1 MPa), the initial resistance and the resistance ratio after the high-rate cycle test were gradually decreased and then were gradually increased. The reason why the resistance was decreased is considered to be that the following effects were obtained by the inner pressure of the battery being increased.

1: The impregnation of the electrolytic solution into the electrode body was promoted.
2: The electrolytic solution impregnated into the electrode body was prevented from being discharged from the electrode body.
3: The reimpregnation of the electrolytic solution, discharged from the electrode body, into the electrode body was promoted.

The reason why the above-described effects were decreased along with an increase in the inner pressure is considered to be that the initial resistance and the reaction resistance ratio were increased by gas clogging or the like in the electrode body. It was verified from the above result that the initial resistance was reliably suppressed when the inner pressure was in a range of about 0.12 MPa to 0.25 MPa. In addition, it was verified that the resistance ratio after the high-rate cycle test tended to be suppressed when the inner pressure was in a range of about 0.12 MPa or higher. It was found that these effects were more efficiently obtained at the same time when the inner pressure of the battery was about 0.14 MPa to 0.23 MPa.

[Test Example 2: Shape of Electrode Body and Electrolytic Solution Movement Blocking Mechanism]

In this test example, the shape of the flat wound electrode body and the form of the insulating bag-shaped film were changed, and $LiPF_2(C_2O_4)_2$ having a concentration of 0.04 mol/L was added to the nonaqueous electrolytic solution. Under the same conditions as those of Test Example 1 other than the above-described conditions, nonaqueous electrolyte secondary batteries having 28 forms in total were prepared. That is, when the winding axial direction was the horizontal direction, and the long diameter direction of the elongated circle-like cross-section is the vertical direction, the width of the winding axis was adjusted such that the aspect ratio (vertical/horizontal) was changed to seven different values in a range of 0.3 to 0.8. As a result, wound electrode bodies were prepared.
In addition, insulating films having four unfolded shapes shown in FIGS. 3AA, 3BA, 3CA, and 3DA were folded into bag-shaped films having the forms shown in FIGS. 3AB, 3BB, 3CB, and 3DB. When the insulating film having an unfolded shape shown in FIG. 3DA was used, the bag-shaped film having a closed bottom was prepared by folding the insulating film into a bag-shaped film and fusing the bottom surface portion and the narrow side surface portions. Batteries in which the bag-shaped films shown in FIGS. 3AB to 3DB accommodated the flat wound electrode body were set as Batteries A to D, respectively.

(High-Rate Cycle Test)

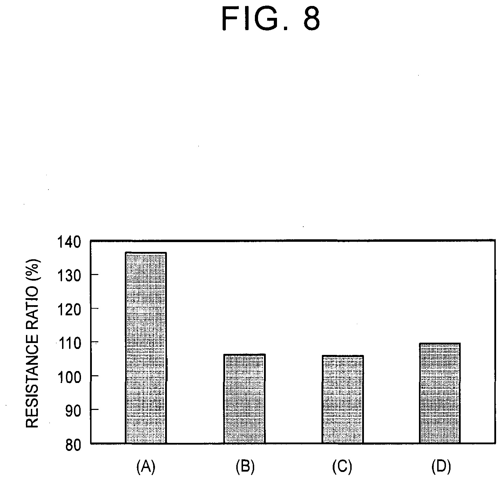

A conditioning treatment was performed on the prepared 28 batteries under the same conditions as those of Test Example 1. All the inner pressures of the batteries after the conditioning treatment were about 0.18 MPa when measured using an inner pressure measuring gauge. The reason is considered to be as follows: LPFO contained in the batteries was degraded due to the conditioning treatment (initial charging), and CO gas was produced in the battery cases. Next, the initial resistances of these batteries were measured and were provided for the high-rate cycle test, and then the resistance ratio was measured. The results were shown in FIG. 7 as a relationship between the aspect ratio of the flat wound electrode body and the reaction resistance ratio. In addition, the measurement results of the resistance ratio were obtained from Batteries A to D having the same aspect ratio and four different forms of bag-shaped films. The results, are shown in FIG. 8.
As shown in FIG. 7, it was verified that, in regard to the shape of the flat wound electrode body, as the aspect ratio increased, the resistance ratio increased irrespective of the form of the bag-shaped film. The reason is considered to be as follows: as the aspect ratio (that is, the relative dimension in the vertical direction) of the flat wound electrode body increases, the electrolytic solution is more likely to be impregnated into the center of the electrode body and is not likely to be discharged from the electrode body. In this example, the following result was obtained: the resistance ratio was 150% or more when the aspect ratio of the electrode body was in a range of 0.48 or less. It is considered from the above result that the resistance increase can be suppressed to be low even after high-rate charging and discharging by adjusting the aspect ratio of the flat wound electrode body to be about 0.5 or less.
In addition, it was verified from FIGS. 7 and 8 that a significant difference in resistance ratio was present between Battery A and other Batteries B to D depending on the forms of the bag-shaped film. That is, it was found that, in Batteries B to D, the resistance ratio after high-rate charging and discharging was maintained to be lower than that of Battery A. The reason is considered to be as follows. That is, in Battery A, the gap was formed among the bottom surface portion and the narrow side surface portions of the bag-shaped film. Therefore, the electrolytic solution was discharged from the electrode body during high-rate charging-discharging cycles, flowed out of the bag-shaped film, and was not likely to return to the electrode body. In Battery A having such a configuration, it is considered that the amount of electrolytic solution in the electrode body was decreased, and the reaction resistance was significantly increased. On the other hand, in Battery D in which the bottom surface portion and the narrow side surface portions of the bag-shaped film were closed by welding, the electrolytic solution was held in the bag-shaped film even after being discharged from the electrode body due to high-rate charging-discharging cycles. Further, not only the pressurization effect but also the effect of impregnating the electrolytic solution into the electrode body again were obtained. As a result, it is considered that, in Battery C, the resistance ratio was significantly decreased as compared to Battery A. In Batteries B and C in which the gap among the bottom surface portion and the narrow side surface portions of the bag-shaped film were loosely blocked by the overlapping of films, the same effects were obtained due to the same actions as those of Battery D.

Hereinabove, the lithium ion secondary battery according to the embodiment of the invention has been described. However, the nonaqueous electrolyte secondary battery according to the invention is not limited to the above-described embodiment, and various modifications can be made. For example, the electrolytic solution movement blocking mechanism that is provided among the bottom surface portion and the narrow side surface portions of the bag-shaped film is not limited to the above-described examples as long as it prevents the movement of the electrolytic solution between the inside and outside of the bag-shaped film, and various modifications can be made. In addition, as described above, the invention may contribute to the improvement of the performance of nonaqueous electrolyte secondary batteries (for example, a lithium ion secondary battery). The invention is suitably applicable to a lithium ion secondary battery as a drive power supply for a vehicle such as a hybrid vehicle or an electric vehicle. The drive power supply for a vehicle may be a battery pack in which plural secondary batteries are combined.

## Claims

1. A nonaqueous electrolyte secondary battery comprising:

    an electrode body (20) having a laminate structure in which a positive electrode (30) and a negative electrode (40) are laminated;
    a nonaqueous electrolytic solution;
    a battery case (80) that accommodates the electrode body (20) and the nonaqueous electrolytic solution; and
    a bag-shaped film (10) that covers the electrode body (20) to insulate the electrode body (20) and an inner wall of the battery case (80) from each other, wherein
    an inner pressure of the battery case (80) is adjusted to be 0.14 MPa to 0.23 MPa, wherein
    the bag-shaped film (10) has an opening that is positioned on an upper side of the battery case (80) and is formed of one sheet-shaped insulating film,
    the insulating film has at least a bag bottom portion (12), a first wide side surface portion (14a), a second wide side surface portion (14b), a first narrow side surface portion (16a1), a second narrow side surface portion (16a2), a third narrow side surface portion (16b1), a fourth narrow side surface portion (16b2), and a movement blocking mechanism,
    the first wide side surface portion (14a) and the second wide side surface portion (14b) are folded centering on the bag bottom portion (12),
    the first narrow side surface portion (16a1) and the second narrow side surface portion (16a2) extend from the first wide side surface portion (14a) to the second wide side surface portion (14b),
    the third narrow side surface portion (16b1) and the fourth narrow side surface portion (16b2) extend from the second wide side surface portion (14b) to the first wide side surface portion (14a),
    the first narrow side surface portion (16a1) and the second narrow side surface portion (16a2) are joined to the third narrow side surface portion (16b1) and the fourth narrow side surface portion (16b2), respectively,
    the movement blocking mechanism is surrounded by the bag bottom portion (12), the first narrow side surface portion (16a1), and the third narrow side surface portion (16b1) in a state where the insulating film is unfolded as a sheet,
    the movement blocking mechanism includes an extending portion (18),
    the extending portion (18) extends from the bag bottom portion (12) and is folded to overlap lower ends of the first narrow side surface portion (16a1) and the third narrow side surface portion (16b1),
    the movement blocking mechanism is configured to block at least a portion of a gap of the bag-shaped film (10) through which an inside and an outside of the bag-shaped film (10) are communicated with each other,
    the nonaqueous electrolytic solution contains a carbon monoxide producing agent,
    the carbon monoxide producing agent is an oxalato complex compound containing at least one of phosphorus and boron as a constituent element
    the battery case (80) has a flat square shape,

the positive electrode(30) and the negative electrode (40) have an elongated shape,

the positive electrode(30) and the negative electrode (40) are laminated with a separator interposed between the positive electrode(30) and the negative electrode (40),

the electrode body (20) is a flat wound electrode body (20) in which the positive electrode(30), the negative electrode (40), and the separator are wound in a flat shape,

the battery case (80) has a wide side surface and a narrow side surface,

the electrode body (20) is disposed such that a winding axial direction of the electrode body (20) is a horizontal direction of the wide side surface, and

a ratio of a dimension of the electrode body (20) in a vertical direction of the wide side surface to a dimension of the electrode body (20) in the horizontal direction is within a range of 0.2 to 0.5.

2. The nonaqueous electrolyte secondary battery according to claim 1, wherein
an internal space of the battery case (80) contains carbon monoxide.

3. The nonaqueous electrolyte secondary battery according to claim 1 or 2, wherein
the wide side surface and the narrow side surface are connected to a side of the battery case (80),
the horizontal direction is perpendicular to the side of the battery case (80) and is parallel to the wide side surface, and
the vertical direction is perpendicular to the horizontal direction and is parallel to the wide side surface.

4. The nonaqueous electrolyte secondary battery according to claim 1, wherein
the extending portion (18) is joined to at least one of the first narrow side surface portion (16a1) and the third narrow side surface portion (16b1).

5. The nonaqueous electrolyte secondary battery according to any one of claims 1 to 4, wherein
a coating film containing at least one of phosphorus and boron is formed on a surface of the negative electrode (40).

6. A method of manufacturing a nonaqueous electrolyte secondary battery, the method comprising:

allowing an insulating bag-shaped film (10) to accommodate an electrode body (20) having a laminate structure where a positive electrode(30) and a negative electrode (40) are laminated;

allowing a battery case (80) to accommodate the electrode body (20), which electrode body (20) is accommodated in the bag-shaped film (10), and a nonaqueous electrolytic solution; and

adjusting an inner pressure of the battery case (80) to be 0.14 MPa to 0.23 MPa;

disposing an opening of the bag-shaped film (10) on an upper side of the battery case (80); and

forming one sheet-shaped insulating film that has at least a bag bottom portion (12), a first wide side surface portion (14a), a second wide side surface portion (14b), a first narrow side surface portion (16a1), a second narrow side surface portion (16a2), a third narrow side surface portion (16b1), a fourth narrow side surface portion (16b2), and a movement blocking mechanism, wherein

the first narrow side surface portion (16a1) and the second narrow side surface portion (16a2) extend from the first wide side surface portion (14a) in a width direction of the first wide side surface portion (14a),

the third narrow side surface portion (16b1) and the fourth narrow side surface portion (16b2) extend from the second wide side surface portion (14b) in a width direction of the second wide side surface portion (14b), and

the movement blocking mechanism is surrounded by the bag bottom portion (12), the first narrow side surface portion (16a1), and the third narrow side surface portion (16b1) in a state where the insulating film is unfolded as a sheet;

forming the bag-shaped film (10) of the insulating film;

folding the first wide side surface portion (14a) and the second wide side surface portion (14b) centering on the bag bottom portion (12);

folding back the first narrow side surface portion (16a1) and the second narrow side surface portion (16a2) toward the first wide side surface portion (14a);

folding back the third narrow side surface portion (16b1) and the fourth narrow side surface portion (16b2) toward the second wide side surface portion (14b);

joining the first narrow side surface portion (16a1) and the second narrow side surface portion (16a2) to the third narrow side surface portion (16b1) and the fourth narrow side surface portion (16b2), respectively;

disposing the movement blocking mechanism so as to block at least a portion of a gap of the bag-shaped film (10) through which an inside and an outside of the bag-shaped film (10) are communicated with each other;
forming the battery case (80) in a flat square shape having a wide side surface and a narrow side surface;
forming each of the positive electrode(30) and the negative electrode (40) into an elongated shape;
laminating the elongated positive electrode(30) and the elongated negative electrode (40) with a separator interposed between the positive electrode(30) and the negative electrode (40);
winding the electrode body (20) in a flat shape;
forming the electrode body (20) such that a ratio of a dimension of the electrode body (20) in a vertical direction of the wide side surface to a dimension of the electrode body (20) in a horizontal direction of the wide side surface is within a range of 0.2 to 0.5; and
disposing the electrode body (20) such that a winding axial direction of the electrode body (20) is the horizontal direction.

7. The method according to claim 6, further comprising
introducing a carbon monoxide producing agent into the battery case (80), the carbon monoxide producing agent containing at least one of oxalato phosphate and oxalato borate, wherein
the inner pressure of the battery case (80) is adjusted by carbon monoxide which is produced by the carbon monoxide producing agent being degraded when the nonaqueous electrolyte secondary battery is charged.

## Patentansprüche

1. Sekundärbatterie mit nichtwässrigem Elektrolyten, aufweisend:

einen Elektrodenkörper (20) mit einer Laminatstruktur, in der eine Positivelektrode (30) und eine Negativelektrode (40) laminiert sind;
eine nichtwässrige Elektrolytlösung;
ein Batteriegehäuse (80), das den Elektrodenkörper (20) und die nichtwässrige Elektrolytlösung aufnimmt; und
ein beutelförmiger Film (10), der den Elektrodenkörper (20) abdeckt, um den Elektrodenkörper (20) und eine Innenwand des Batteriegehäuses (80) voneinander zu isolieren, wobei
ein Innendruck des Batteriegehäuses (80) so eingestellt wird, dass er zwischen einschließlich 0,14 MPa und einschließlich 0,23 MPa liegt, wobei der beutelförmige Film (10) eine Öffnung aufweist, die auf einer Oberseite des Batteriegehäuses (80) positioniert ist und aus einem plattenförmigen Isolierfilm besteht,
wobei der Isolierfilm zumindest einen Beutelbodenabschnitt (12), einen ersten Breitseitenoberflächenabschnitt (14a), einen zweiten Breitseitenoberflächenabschnitt (14b), einen ersten Engseitenoberflächenabschnitt (16a1), einen zweiten Engseitenoberflächenabschnitt (16a2), einen dritten Engseitenoberflächenabschnitt (16b1), einen vierten Engseitenoberflächenabschnitt (16b2) und einen Bewegungsblockiermechanismus aufweist,
wobei der erste Breitseitenoberflächenabschnitt (14a) und der zweite Breitseitenoberflächenabschnitt (14b) auf den Beutelbodenabschnitt (12) zentriert gefaltet sind,
wobei sich der erste Engseitenoberflächenabschnitt (16a1) und der zweite Engseitenoberflächenabschnitt (16a2) von dem ersten Breitseitenoberflächenabschnitt (14a) zu dem zweiten Breitseitenoberflächenabschnitt (14b) erstrecken,
wobei sich der dritte Engseitenoberflächenabschnitt (16b1) und der vierte Engseitenoberflächenabschnitt (16b2) von dem zweiten Breitseitenoberflächenabschnitt (14b) zu dem ersten Breitseitenoberflächenabschnitt (14a) erstrecken,
wobei der erste Engseitenoberflächenabschnitt (16al) und der zweite Engseitenoberflächenabschnitt (16a2) mit dem dritten Engseitenoberflächenabschnitt (16b1) bzw. dem vierten Engseitenoberflächenabschnitt (16b2) verbunden sind,
wobei der Bewegungsblockiermechanismus in einem Zustand, in dem der Isolierfilm als eine Platte entfaltet ist, von dem Beutelbodenabschnitt (12), dem ersten Engseitenoberflächenabschnitt (16a1) und dem dritten Engseitenoberflächenabschnitt (16b1) umgeben ist,
wobei der Bewegungsblockiermechanismus einen Erstreckungsabschnitt (18) beinhaltet,
wobei der Erstreckungsabschnitt (18) sich von dem Beutelbodenabschnitt (12) aus erstreckt und so gefaltet ist, dass er untere Enden des ersten Engseitenoberflächenabschnitt (16a1) und des dritten Engseitenoberflächenabschnitts (16b1) überlappt,
wobei der Bewegungsblockiermechanismus so konfiguriert ist, dass er zumindest einen Abschnitt einer Lücke des beutelförmigen Films (10) blockiert, durch die ein Inneres und ein Äußeres des beutelförmigen Films (10) miteinander kommunizieren,
wobei die nichtwässrige Elektrolytlösung ein kohlenmonoxiderzeugendes Agens enthält,

wobei das kohlenmonoxiderzeugende Agens eine Oxalatokomplexverbindung ist, die zumindest eines von Phosphor und Bor als Hauptbestandteil enthält,

wobei das Batteriegehäuse (80) eine flache, quadratische Form aufweist,

wobei die Positivelektrode (30) und die Negativelektrode (40) eine längliche Form haben,

wobei die Positivelektrode (30) und die Negativelektrode (40) laminiert sind, wobei ein Separator zwischen der Positivelektrode (30) und der Negativelektrode (40) vorhanden ist,

wobei der Elektrodenkörper (20) ein flach gewickelter Elektrodenkörper (20) ist, in dem die Positivelektrode (30), die Negativelektrode (40) und der Separator in einer flachen Form gewickelt sind,

wobei das Batteriegehäuse (80) eine Breitseitenoberfläche und eine Engseitenoberfläche aufweist,

wobei der Elektrodenkörper (20) so angeordnet ist, dass eine axiale Wickelrichtung des Elektrodenkörpers (20) eine horizontale Richtung der Breitseitenoberfläche ist, und

wobei ein Verhältnis einer Abmessung des Elektrodenkörpers (20) in einer vertikalen Richtung der Breitseitenoberfläche zu einer Abmessung des Elektrodenkörpers (20) in der horizontalen Richtung innerhalb eines Bereichs von einschließlich 0,2 bis einschließlich 0,5 liegt.

2. Sekundärbatterie mit nichtwässrigem Elektrolyten nach Anspruch 1, wobei ein Innenraum des Batteriegehäuses (80) Kohlenmonoxid enthält.

3. Sekundärbatterie mit nichtwässrigem Elektrolyten nach Anspruch 1 oder 2, wobei die Breitseitenoberfläche und die Engseitenoberfläche mit einer Seite des Batteriegehäuses (80) verbunden sind,

wobei die horizontale Richtung zu der Seite des Batteriegehäuses (80) rechtwinklig ist und zu der Breitseitenoberfläche parallel ist, und

wobei die vertikale Richtung zu der horizontalen Richtung rechtwinklig ist und zu der Breitseitenoberfläche parallel ist.

4. Sekundärbatterie mit nichtwässrigem Elektrolyten nach Anspruch 1, wobei der Erstreckungsabschnitt (18) mit zumindest einem von dem ersten Engseitenoberflächenabschnitt (16a1) und dem dritten Engseitenoberflächenabschnitt (16b1) verbunden ist.

5. Sekundärbatterie mit nichtwässrigem Elektrolyten nach einem der Ansprüche 1 bis 4, wobei ein Beschichtungsfilm, der zumindest eines von Phosphor und Bor enthält, auf einer Oberfläche der Negativelektrode (40) ausgebildet ist.

6. Verfahren zum Herstellen einer Sekundärbatterie mit nichtwässrigem Elektrolyten, wobei das Verfahren aufweist:

Zulassen, dass ein isolierender, beutelförmiger Film (10) einen Elektrodenkörper (20) mit einer Laminatstruktur, wobei eine Positivelektrode (30) und eine Negativelektrode (40) laminiert sind, aufnimmt;

Zulassen, dass ein Batteriegehäuse (80) den Elektrodenkörper (20), der in dem beutelförmigen Film (10) aufgenommen ist, und eine nichtwässrige Elektrolytlösung aufnimmt; und

Einstellen eines Innendrucks des Batteriegehäuses (80) auf einen Wert zwischen einschließlich 0,14 MPa und einschließlich 0,23 MPa;

Anordnen einer Öffnung des beutelförmigen Films (10) auf einer Oberseite des Batteriegehäuses (80); und

Ausbilden eines plattenförmigen Isolierfilms, der zumindest einen Beutelbodenabschnitt (12), einen ersten Breitseitenoberflächenabschnitt (14a), einen zweiten Breitseitenoberflächenabschnitt (14b), einen ersten Engseitenoberflächenabschnitt (16a1), einen zweiten Engseitenoberflächenabschnitt (16a2), einen dritten Engseitenoberflächenabschnitt (16b1), einen vierten Engseitenoberflächenabschnitt (16b2) und einen Bewegungsblockiermechanismus aufweist, wobei

sich der erste Engseitenoberflächenabschnitt (16a1) und der zweite Engseitenoberflächenabschnitt (16a2) von dem ersten Breitseitenoberflächenabschnitt (14a) aus in einer Breitenrichtung des ersten Breitseitenoberflächenabschnitts (14a) erstrecken,

wobei sich der dritte Engseitenoberflächenabschnitt (16b1) und der vierte Engseitenoberflächenabschnitt (16b2) von dem zweiten Breitseitenoberflächenabschnitt (14b) in einer Breitenrichtung des zweiten Breitseitenoberflächenabschnitts (14b) erstrecken, und

wobei der Bewegungsblockiermechanismus in einem Zustand, in dem der Isolierfilm als eine Platte entfaltet ist, von dem Beutelbodenabschnitt (12), dem ersten Engseitenoberflächenabschnitt (16a1) und dem dritten Engseitenoberflächenabschnitt (16b1) umgeben ist;

Ausbilden des beutelförmigen Films (10) des Isolierfilms;

Falten des ersten Breitseitenoberflächenabschnitts (14a) und des zweiten Breitseitenoberflächenabschnitts (14b), der auf den Beutelbodenabschnitt (12) zentriert ist;

Zurückfalten des ersten Engseitenoberflächenabschnitts (16a1) und des zweiten Engseitenoberflächenabschnitts (16a2) in Richtung des ersten Breitseitenoberflächenabschnitts (14a);

Zurückfalten des dritten Engseitenoberflächenabschnitts (16b1) und des vierten Engseitenoberflächenabschnitts (16b2) in Richtung des zweiten Breitseitenoberflächenabschnitts (14b);

Verbinden des ersten Engseitenoberflächenabschnitts (16a1) und des zweiten Engseitenoberflächenabschnitts (16a2) mit dem dritten Engseitenoberflächenabschnitt (16b1) bzw. dem vierten Engseitenoberflächenabschnitt (16b2);

Anordnen des Bewegungsblockiermechanismus so, dass er zumindest einen Abschnitt einer Lücke des beutelförmigen Films (10) blockiert, durch die ein Inneres und ein Äußeres des beutelförmigen Films (10) miteinander kommunizieren;

Ausbilden des Batteriegehäuses (80) in einer flachen, quadratischen Form mit einer Breitseitenoberfläche und einer Engseitenoberfläche;

Formen sowohl der Positivelektrode (30) als auch der Negativelektrode (40) in eine längliche Form;

Laminieren der länglichen Positivelektrode (30) und der länglichen Negativelektrode (40) mit einem Separator, der zwischen der Positivelektrode (30) und der Negativelektrode (40) angeordnet ist;

Wickeln des Elektrodenkörpers (20) in eine flache Form;

Formen des Elektrodenkörpers (20) so, dass ein Verhältnis einer Abmessung des Elektrodenkörpers (20) in einer vertikalen Richtung der Breitseitenoberfläche zu einer Abmessung des Elektrodenkörpers (20) in einer horizontalen Richtung der Breitseitenoberfläche innerhalb eines Bereichs von einschließlich 0,2 bis einschließlich 0,5 liegt; und

Anordnen des Elektrodenkörpers (20) so, dass eine axiale Wickelrichtung des Elektrodenkörpers (20) die horizontale Richtung ist.

7. Verfahren nach Anspruch 6, ferner aufweisend:

Einführen eines kohlenmonoxiderzeugenden Agens in das Batteriegehäuse (80),

wobei das kohlenmonoxiderzeugende Agens zumindest eines von Oxalatphosphat und Oxalatborat enthält, wobei

der Innendruck des Batteriegehäuses (80) durch Kohlenmonoxid eingestellt wird, das dadurch erzeugt wird, dass das kohlenmonoxiderzeugende Agens zersetzt wird, wenn die Sekundärbatterie mit nichtwässrigem Elektrolyten geladen wird.

**Revendications**

1. Accumulateur secondaire à électrolyte non aqueux comprenant :

un corps d'électrode (20) présentant une structure stratifiée dans laquelle une électrode positive (30) et une électrode négative (40) sont stratifiées ;

une solution électrolytique non aqueuse ;

un boîtier d'accumulateur (80) qui loge le corps d'électrode (20) et la solution électrolytique non aqueuse ; et

un film en forme de sac (10) qui couvre le corps d'électrode (20) pour isoler le corps d'électrode (20) et une paroi interne du boîtier d'accumulateur (80) l'un de l'autre, dans lequel

une pression interne du boîtier d'accumulateur (80) est ajustée pour être de 0,14 MPa à 0,23 MPa, dans lequel

le film en forme de sac (10) présente une ouverture qui est positionnée sur un côté supérieur du boîtier d'accumulateur (80) et est formée d'un film isolant en forme de feuille,

le film isolant présente au moins une portion de fond de sac (12), une première portion de surface latérale large (14a), une seconde portion de surface latérale large (14b), une première portion de surface latérale étroite (16a1), une seconde portion de surface latérale étroite (16a2), une troisième portion de surface latérale étroite (16b1), une quatrième portion de surface latérale étroite (16b2), et un mécanisme de blocage de mouvement,

la première portion de surface latérale large (14a) et la seconde portion de surface latérale large (14b) sont pliées au centre sur la portion de fond de sac (12),

la première portion de surface latérale étroite (16a1) et la seconde portion de surface latérale étroite (16a2) s'étendent à partir de la première portion de surface latérale large (14a) jusqu'à la seconde portion de surface latérale large (14b),

la troisième portion de surface latérale étroite (16b1) et la quatrième portion de surface latérale étroite (16b2) s'étendent de la seconde portion de surface latérale large (14b) jusqu'à la première portion de surface latérale large (14a),

la première portion de surface latérale étroite (16a1) et la seconde portion de surface latérale étroite (16a2) sont jointes à la troisième portion de surface latérale étroite (16b1) et la quatrième portion de surface latérale étroite (16b2), respectivement,

le mécanisme de blocage de mouvement est entouré par la portion de fond de sac (12), la première portion de surface latérale étroite (16a1), et la troisième portion de surface latérale étroite (16b1) dans un état où le film isolant est déroulé comme une feuille,

le mécanisme de blocage de mouvement inclut une portion d'extension (18),

la portion d'extension (18) s'étend à partir de la portion de fond de sac (12) et est pliée pour chevaucher des extrémités inférieures de la première portion de surface latérale étroite (16a1) et la troisième portion de surface latérale étroite (16b1),

le mécanisme de blocage de mouvement est configuré pour bloquer au moins une portion d'un écartement du film en forme de sac (10) à travers lequel un intérieur et un extérieur du film en forme de sac (10) communiquent l'un avec l'autre,

la solution électrolytique non aqueuse contient un agent produisant du monoxyde de carbone,

l'agent produisant du monoxyde de carbone est un composé complexe oxalato contenant au moins un du phosphore et du bore comme un élément constituant,

le boîtier d'accumulateur (80) présente une forme carrée plane,

l'électrode positive (30) et l'électrode négative (40) présentent une forme allongée,

l'électrode positive (30) et l'électrode négative (40) sont stratifiées avec un séparateur intercalé entre l'électrode positive (30) et l'électrode négative (40),

le corps d'électrode (20) est un corps d'électrode enroulé plat (20) dans lequel l'électrode positive (30), l'électrode négative (40), et le séparateur sont enroulés dans une forme plane,

le boîtier d'accumulateur (80) présente une surface latérale large et une surface latérale étroite,

le corps d'électrode (20) est disposé de sorte qu'une direction axiale d'enroulement du corps d'électrode (20) est une direction horizontale de la surface latérale large, et

un rapport d'une dimension du corps d'électrode (20) dans une direction verticale de la surface latérale large à une dimension du corps d'électrode (20) dans la direction horizontale se trouve dans un intervalle de 0,2 à 0,5.

2. Accumulateur secondaire à électrolyte non aqueux selon la revendication 1, dans lequel
un espace interne du boîtier d'accumulateur (80) contient du monoxyde de carbone.

3. Accumulateur secondaire à électrolyte non aqueux selon la revendication 1 ou 2, dans lequel
la surface latérale large et la surface latérale étroite sont connectées à un côté du boîtier d'accumulateur (80),
la direction horizontale est perpendiculaire au côté du boîtier d'accumulateur (80) et est parallèle à la surface latérale large, et
la direction verticale est perpendiculaire à la direction horizontale et est parallèle à la surface latérale large.

4. Accumulateur secondaire à électrolyte non aqueux selon la revendication 1, dans lequel
la portion d'extension (18) est jointe à au moins une de la première portion de surface latérale étroite (16a1) et la troisième portion de surface latérale étroite (16b1).

5. Accumulateur secondaire à électrolyte non aqueux selon l'une quelconque des revendications 1 à 4, dans lequel
un film de revêtement contenant au moins un du phosphore et du bore est formé sur une surface de l'électrode négative (40).

6. Procédé de fabrication d'un accumulateur secondaire à électrolyte non aqueux, le procédé comprenant :

le laisser un film en forme de sac isolant (10) loger un corps d'électrode (20) présentant une structure stratifiée où une électrode positive (30) et une électrode négative (40) sont stratifiées ;
le laisser un boîtier d'accumulateur (80) loger le corps d'électrode (20), lequel corps d'électrode (20) est logé dans le film en forme de sac (10), et une solution électrolytique non aqueuse ; et
l'ajustement d'une pression interne du boîtier d'accumulateur (80) pour qu'elle soit de 0,14 MPa à 0,23 MPa ;
la disposition d'une ouverture du film en forme de sac (10) sur un côté supérieur du boîtier d'accumulateur (80) ; et
la formation d'un film isolant en forme de feuille qui présente au moins une portion de fond de sac (12), une première portion de surface latérale large (14a), une seconde portion de surface latérale large (14b), une première portion de surface latérale étroite (16a1), une seconde portion de surface latérale étroite (16a2), une troisième portion de surface latérale étroite (16b1), une quatrième portion de surface latérale étroite (16b2), et un mécanisme de blocage de mouvement, dans laquelle

la première portion de surface latérale étroite (16a1) et la seconde portion de surface latérale étroite (16a2) s'étendent à partir de la première portion de surface latérale large (14a) dans une direction de largeur de la première portion de surface latérale large (14a),

la troisième portion de surface latérale étroite (16b1) et la quatrième portion de surface latérale étroite (16b2) s'étendent à partir de la seconde portion de surface latérale large (14b) dans une direction de largeur de la seconde portion de surface latérale large (14b), et

le mécanisme de blocage de mouvement est entouré par la portion de fond de sac (12), la première portion de surface latérale étroite (16a1), et la troisième portion de surface latérale étroite (16b1) dans un état où le film isolant est déroulé comme une feuille ;

la formation du film en forme de sac (10) du film isolant ;

le pliage de la première portion de surface latérale large (14a) et la seconde portion de surface latérale large (14b) au centre sur la portion de fond de sac (12) ;

le rabat de la première portion de surface latérale étroite (16a1) et la seconde portion de surface latérale étroite (16a2) vers la première portion de surface latérale large (14a) ;

le rabat de la troisième portion de surface latérale étroite (16b1) et la quatrième portion de surface latérale étroite (16b2) vers la seconde portion de surface latérale large (14b) ;

la jonction de la première portion de surface latérale étroite (16a1) et la seconde portion de surface latérale étroite (16a2) à la troisième portion de surface latérale étroite (16b1) et la quatrième portion de surface latérale étroite (16b2), respectivement ;

la disposition du mécanisme de blocage de mouvement afin qu'il bloque au moins une portion d'un écartement du film en forme de sac (10) à travers lequel un intérieur et un extérieur du film en forme de sac (10) communiquent l'un avec l'autre ;

la formation du boîtier d'accumulateur (80) dans une forme carrée plane présentant une surface latérale large et une surface latérale étroite ;

la formation de chacune de l'électrode positive (30) et de l'électrode négative (40) dans une forme allongée ;

la stratification de l'électrode positive allongée (30) et l'électrode négative allongée (40) avec un séparateur intercalé entre l'électrode positive (30) et l'électrode négative (40) ;

l'enroulement du corps d'électrode (20) dans une forme plane ;

la formation du corps d'électrode (20) de sorte qu'un rapport d'une dimension du corps d'électrode (20) dans une direction verticale de la surface latérale large à une dimension du corps d'électrode (20) dans une direction horizontale de la surface latérale large se trouve dans un intervalle de 0,2 à 0,5 ; et

la disposition du corps d'électrode (20) de sorte qu'une direction axiale d'enroulement du corps d'électrode (20) est la direction horizontale.

7. Procédé selon la revendication 6, comprenant de plus

l'introduction d'un agent de production de monoxyde de carbone dans le boîtier d'accumulateur (80), l'agent de production de monoxyde de carbone contenant au moins un d'oxalato phosphate et d'oxalato borate, dans lequel la pression interne du boîtier d'accumulateur (80) est ajustée par du monoxyde de carbone qui est produit par l'agent de production de monoxyde de carbone étant décomposé lorsque l'accumulateur secondaire à électrolyte non aqueux est chargé.

EP 3 134 930 B1

# FIG. 1

# FIG. 2

HORIZONTAL DIRECTION

10

16a (16a1)

14a

16a (16a2)

12

16b (16b1)

14b

16b (16b2)

# FIG. 3AA

# FIG. 3AB

HORIZONTAL DIRECTION

14a

12

14b

16a

16b

14a

16a, 16b

14b

12

G

# FIG. 3BA

HORIZONTAL DIRECTION $\updownarrow$

14a  12  14b  16a  16b  18'

# FIG. 3BB

16a, 16b  18

# FIG. 3CA

HORIZONTAL DIRECTION $\updownarrow$

14a  12  14b  16a  16b  18'

# FIG. 3CB

16a, 16b  18

# FIG.3DA

HORIZONTAL DIRECTION $\updownarrow$

14a  12  14b  16a  16b  18'

# FIG.3DB  FIG.3DC

16a, 16b  18  16a, 16b

FIG. 4A

10

200

FIG. 4B

200

FIG. 4C

16a1          10          16a2

16b1                      16b2

FIG. 4D

10

## FIG. 5A

## FIG. 5B

# FIG. 6

INNER PRESSURE OF BATTERY (MPa)

RESISTANCE RATIO (%)

INITIAL RESISTANCE (Ω)

# FIG. 7

RESISTANCE RATIO (%)

VERTICAL/HORIZONTAL RATIO

(A)

(B),(C),(D)

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010287456 A
- JP 2013235795 A
- US 2014045016 A1
- US 2012160559 A1
- WO 2014002647 A1